# EUROPEAN PATENT SPECIFICATION

(11) **EP 3 061 272 B1**
(45) Date of publication and mention of the grant of the patent: **25.09.2019**
(21) Application number: 14793959.9
(22) Date of filing: 21.10.2014
(51) Int. Cl.: H04W 4/70, H04L 29/08, G06F 16/951, G06Q 30/02

(54) **CRAWLING OF M2M DEVICES**
CRAWLING VON M2M-VORRICHTUNGEN
INDEXATION DE DISPOSITIFS M2M

(30) Priority: 21.10.2013 US 201361893573 P
(43) Date of publication of application: 31.08.2016
(73) Proprietor: Convida Wireless, LLC, Wilmington, DE 19809-3727 (US)
(72) Inventor: SEED, Dale, N., Allentown, PA 18104 (US); STARSINIC, Michael, F., Newtown, PA 18940 (US); RAHMAN, Shamim, Akbar, Cote Saint-Luc, QC H4V 1B8 (CA); DONG, Lijun, San Diego, CA 92130 (US); MLADIN, Catalina, M., Hatboro, PA 19040 (US); LU, Guang, Thornhill, ON L4J 9B6 (CA); WANG, Chonggang, Princeton, NJ 08540 (US)
(74) Representative: D Young & Co LLP
(86) International application number: PCT/US2014/061530
(87) International publication number: WO 2015/061290

(56) References cited:
- NEC EUROPE LTD: "Towards semantic M2M;M2M(13)024023r3_Towards_semantic_M2M", ETSI DRAFT; M2M(13)024023R3_TOWARDS_SEMANTIC_M2M, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, 22 February 2013 (2013-02-22), pages 1-4, XP014208863, [retrieved on 2013-02-22]
- "Machine to Machine Communications (M2M); Study on Semantic support for M2M Data;TR_101_584_v050_Clean", ETSI DRAFT; TR_101_584_V050_CLEAN, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. M2M, no. V0.5.0, 7 December 2012 (2012-12-07), pages 1-36, XP014094602, [retrieved on 2012-12-07]

## Description

### CROSS REFERENCE TO RELATED APPLICATIONS

This Application claims the benefit of U.S. Provisional Patent Application Serial No. 61/893,573 filed October 21, 2013.

### BACKGROUND

Web users rely heavily upon Web crawlers, indexers, and search engines to proactively discover available Web content, such as Web pages, documents, or the like. Thus, users may query and find Web content for which they are looking in a timely and effective manner via their Web browsers and search engines of choice.

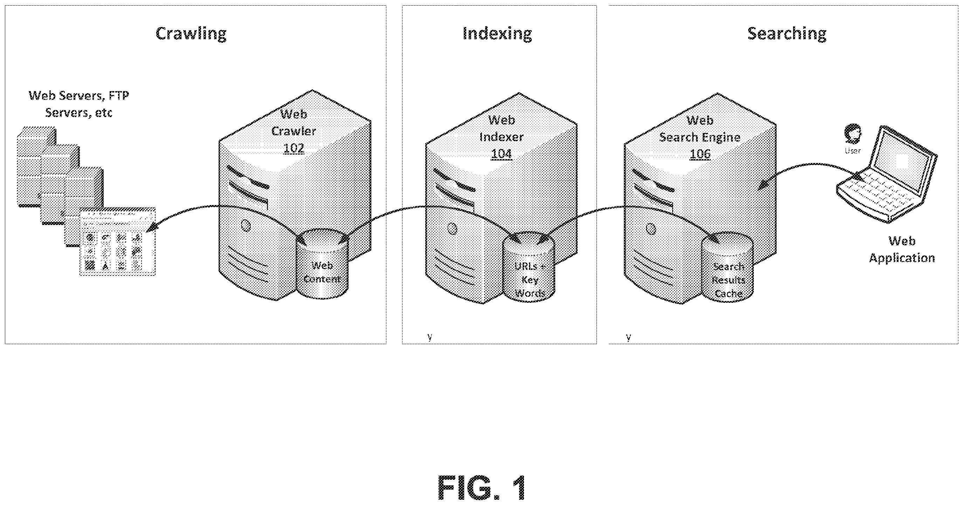

For people to be able to find a website via a search engine (e.g., Google), the website is first crawled by the search engine's Web crawler (e.g., Googlebot) and the website's content is indexed and added to the search engine's index database (e.g., Google's Index database). By way of example, referring to Fig. 1, a Web crawler 102 can crawl Web servers, FTP servers, or the like. A Web indexer 104 can index the crawled content using URLs or key words for example, and a Web search engine 106 can discover the indexed content, which can be displayed as search results. These crawling and indexing actions can be performed in a proactive manner in order to create a searchable database of information that can be used by the Web search engines 106. In doing so, Web searches can be performed in a timely manner with very little delay between entering a query into a Web search engine and getting a response back. Though the Web crawler 102, the Web indexer 104, and the Web search engine 106 are shown separately in Fig. 1, it will be understood that the illustration is merely for exemplary purposes, and Web crawlers, Web indexers, and Web search engines can be integrated with each other.

Thus, a web crawler generally refers to a Web client that goes (crawls) from website to website finding new or updated Web pages and documents that it indexes. A web crawler may also be referred to as a Web robot or bot. As mentioned above, web indexing refers to the process of scanning a Web page or document to abstract key words and/or information that can be added to a search engine's indexing database. A web search engine generally refers to software that is designed to service queries for information that is available on the Web using information provided by Web crawling and indexing. Websites are typically maintained and managed by a webmaster, which is generally a person who is responsible for administering and maintaining a website. As mentioned above, Web crawlers can crawl Web servers, FTP servers, or the like, but the current Web lacks capabilities. For example, the current Web fails to efficiently and effectively crawl resource-constrained devices, such as various machine-to-machine (M2M) devices for example. Although ETSI draft document by NEC EUROPE LTD: "Towards semantic M2M, 22 February 2013 (2013-02-22), pages 1-4, XP014208863, discloses a web crawler exploring M2M resources, various M2M devices are not effectively indexed or searched by Web search engines.

### SUMMARY

Described herein are methods, devices, and systems for crawling machine-to-machine (M2M) devices. For example, in one embodiment, a service provides automated Webmaster-like functionality to M2M devices that do not have a traditional human Webmaster. In accordance with another example embodiment, an M2M node comprises a processor and a memory coupled with the processor, the memory having stored thereon executable instructions that when executed by the processor cause the processor to effectuate operations. The operations may include receiving crawler metadata associated with an M2M device. The M2M node may host an M2M crawler service. The M2M node may crawl the M2M device for one or more resources in accordance with the received crawler metadata. Further, the M2M node may publish the one or more resources such that the one or more resources can be discovered by at least one of a web crawler, a service, or an application. For example, the M2M node may send a query to the M2M device for the crawler metadata, and the crawler metadata may be received in response to the query. In accordance with another example embodiment, the M2M node may send a subscription request to the M2M device. The subscription request may include a trigger condition associated with a crawler event, wherein the M2M device is configured in accordance with the subscription request. When the trigger condition is satisfied, the M2M node may receive a notification of the crawler event. In response to receiving the notification, the M2M node may re-crawl the M2M device for a select resource of the one or more resources, wherein the select resource is defined in the subscription request. Alternatively, or additionally, in response to receiving the notification, the M2M node may generate a second notification for one or more web crawlers.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

A more detailed understanding may be had from the following description, given by way of example in conjunction with accompanying drawings wherein:
Fig. 1 is a diagram that shows an example of web crawling, indexing, and searching;
Fig. 2 is a table that shows an example file defining a list of web pages that crawlers should avoid;
Fig. 3 is a depiction of an example protocol stack that includes an M2M service layer;
Fig. 4 is a system diagram that illustrates an M2M crawler, an M2M indexer, and search services in accordance with an example embodiment;
Fig. 5 is a system diagram that illustrates a distributed M2M crawler service architecture in accordance with an example embodiment;
Fig. 6 is a system diagram that illustrates a centralized M2M crawler service architecture in accordance with an example embodiment;
Fig. 7 is a flow diagram for crawling M2M devices in accordance with an example embodiment;
Fig. 8 is a call flow that shows M2M crawler metadata being published in accordance with various example embodiments;
Fig. 9 is a call flow for querying an M2M device for M2M crawler metadata in accordance with an example embodiment;
Fig. 10 is a call flow that shows an M2M crawler service monitoring requests to auto-generate crawler metadata in accordance with an example embodiment;
Fig. 11 is a call flow that shows an M2M crawler service subscribing to events to receive crawler metadata in accordance with another example embodiment;
Fig. 12 is a flow diagram for M2M crawling in accordance with an example embodiment;
Fig. 13 is a call flow for crawling M2M device resources without crawler metadata without in accordance with another example embodiment;
Fig. 14 is a depiction of M2M crawler extensions to an example sitemap file in accordance with an example embodiment;
Fig. 15 is a call flow that illustrates passive and proactive M2M crawler metadata publishing in accordance with an example embodiment;
Fig. 16 is a call flow that illustrates an M2M crawler service that supports crawler event generation in accordance with an example embodiment;
Fig. 17 is block diagram that illustrates an oneM2M crawler Capability Service Function (CSF) according to an example embodiment;
Fig. 18A is a system diagram of an example machine-to-machine (M2M) or Internet of Things (IoT) communication system in which one or more disclosed embodiments may be implemented;
Fig. 18B is a system diagram of an example architecture that may be used within the M2M / IoT communications system illustrated in Fig. 18A;
Fig. 18C is a system diagram of an example M2M / IoT terminal or gateway device that may be used within the communications system illustrated in Fig. 18A; and
Fig. 18D is a block diagram of an example computing system in which aspects of the communication system of Fig. 18A may be embodied.

### DETAILED DESCRIPTION OF ILLUSTRATIVE EMBODIMENTS

The ensuing detailed description is provided to illustrate exemplary embodiments and is not intended to limit the scope, applicability, or configuration of the invention. Various changes may be made in the function and arrangement of elements and steps without departing from the spirit and scope of the invention.

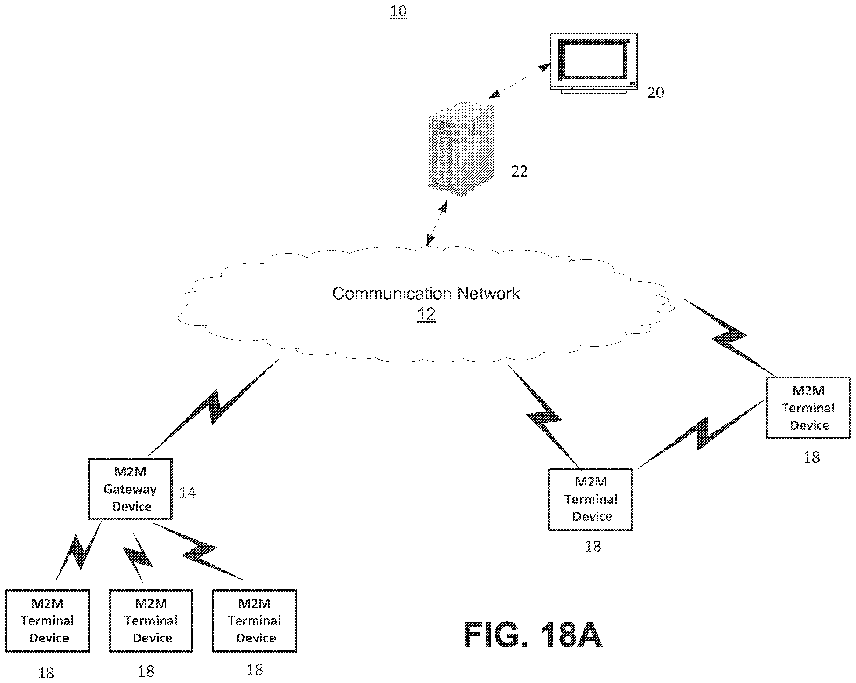

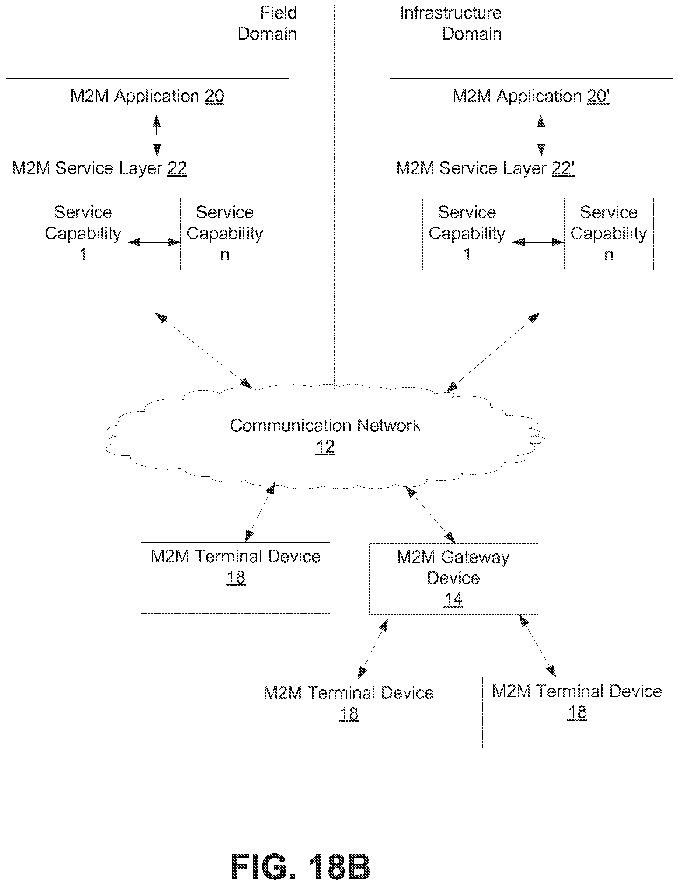

Referring generally to Figs. 18A and 18B, which are described in more detail below, an example machine-to-machine (M2M), Internet of Things (IoT), or Web of Things (WoT) communication system 10 can include a plurality of devices, such as a plurality of machine-to-machine (M2M) devices for example, and a service layer 22 that can communicate with the M2M devices via communication network 12. As used herein, an M2M device may refer to any device that communicates in a network, such as a gateway device 14 or terminal (endpoint) devices 18 for example. Each of the M2M gateway devices 14 and M2M terminal devices 18 may be configured to transmit and receive signals via the communication network 12 or direct radio link. The M2M devices 18 may also receive data from an M2M application 20 or another M2M device 18. Further, data and signals may be sent to and received from the M2M application 20 via the M2M service layer 22. It will be understood that the M2M service layer 22 may communicate with any number of M2M applications, M2M gateway devices, M2M terminal devices, and communication networks as desired. The M2M service layer 22 may be implemented by one or more servers, computers, or the like. The service layer 22 can provide various services and capabilities to the M2M applications 20, M2M gateway devices 14, and M2M devices 18. Further, M2M service layers can be deployed on various servers, gateways, and devices. As used herein, unless otherwise specified, an M2M node refers to any device, gateway, or server within an M2M network, such as the M2M system 10 for example. The M2M service layer 22 may be implemented as a software middleware layer (above the IP stack) that supports value-added services for M2M applications and devices through a set of Application Programming Interfaces (APIs) and underlying networking interfaces. An example M2M service that can be deployed in accordance with an example embodiment is an M2M crawler service 400, described in detail below.

By way of further background regarding crawling, indexing, and searching websites, webmasters are generally responsible for maintaining a website. In particular, webmasters may maintain a website's sitemap and robots.txt files. A website's sitemap defines the list of links to Web pages that crawlers should crawl as well as attributes to help the crawler (e.g., how often to crawl a page). Table 1 lists example supported sitemap XML protocol attributes. A webmaster may manually submit a given website's sitemap to popular search engines so that the website is noticed. Example search engines include, without limitation, Google, Bing and Yahoo!, and example specialty search engines including Bing Health, WebMD, and Yahoo! News.

**Table 1**

| **Tag/Attribute** | **Required Optional** | **Description** |
|---|---|---|
| <url> | Required | Parent tag for each URL entry. The remaining tags are child tags of this parent tag. A sitemap file typically has multiple <url> tags with corresponding child tags. |
| <loc> | Required | URL of the page to be crawled |
| <lastmod> | Optional | Date of last modification given in W3C Date/Time format |
| <changefreq> | Optional | How frequently page is likely to change. This value provides general information for search engines and may not correlate exactly to how often a search engine crawls the page. Valid values are always, hourly, daily, weekly, monthly, yearly, never. |
| <priority> | Optional | The priority of this URL relative to other URLs on this site. Valid values are 0.0 to 1.0. Does not affect how this URL is compared to URLs on other sites. |

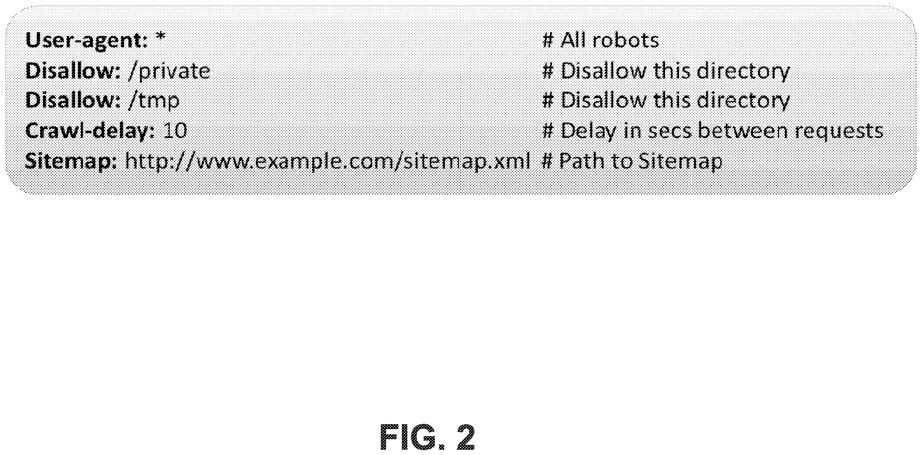

A website's robots.txt may define the list of Web pages that crawlers should exclude when crawling a website, the delay between re-crawling, and the location of a Web site's sitemap as shown in the example depicted in Fig. 2.

To crawl to a website and traverse the site's web pages and links, Web crawlers typically rely on a website's sitemap and robots.txt files that are provided by the website's webmaster. Web crawlers may also rely on hyperlinks to the website that a Web crawler encounters while crawling other websites. A Web crawler goes from website to website, thereby finding new/updated Web pages, and documents and stores snapshots of these that can then be indexed. Websites can be crawled by many independent Web crawlers on a repeated basis and in an uncoordinated manner. Based on a given Web crawler's algorithms and policies, the Web crawler may determine if/when to re-crawl a website and re-index the site's web pages/documents. A Web indexer indexes Web content discovered by a Web crawler. A Web indexer may or may not be integrated with a Web crawler. Indexing may include scanning a Web page/document to abstract key words and information that is added to a search engine's indexing database. Web indexers may support indexing content that is text based (e.g., .txt, .html, .doc, .xls, .ppt, .pdf, etc). Web search engines may rely on indexed information made available from Web crawlers and Web indexers in order to service search engine queries. Web search engines support keyword searches for information hosted on various websites that have been crawled and indexed. A Web search engine may query an index database for entries that match the keyword(s) specified in a search request, and may create search results that consist of a list of matching links (e.g., URLs) that reference Web pages and Web documents containing content that matches the keyword(s) specified in the query request.

Referring again generally to Figs. 18A and 18B, an M2M service layer may support Application Programming Interfaces (APIs) that provide applications and devices access to a collection of M2M centric capabilities supported by the service layer. A few examples include, presented without limitation, security, charging, data management, device management, provisioning, and connectivity management. These capabilities may be made available to applications via APIs that make use of message formats, resource structures, and resource representations defined by the M2M service layer.

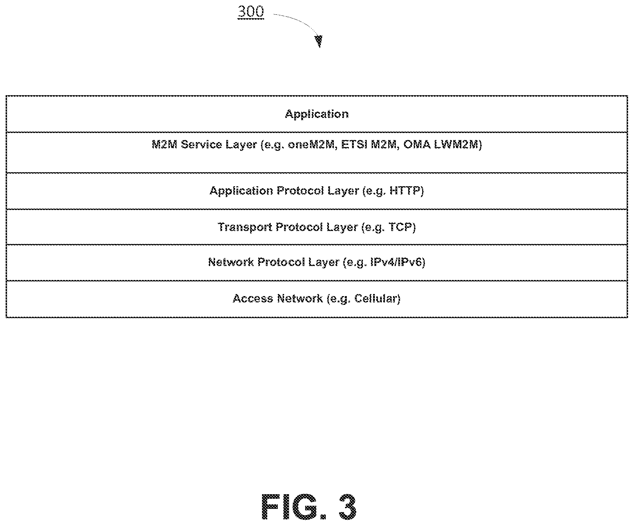

There are multiple M2M architectures with service layers, such as European Telecommunications Standards Institute (ETSI) M2M service layer discussed in draft ETSI TS 102 690 1.1.1 (2011-10), the Open Mobile Alliance (OMA) Lightweight M2M service layer discussed in draft version 1.0 - 14 Mar 2013, and the oneM2M service layer discussed in oneM2M-TS-0001 oneM2M Functional Architecture-V-0.1.2. M2M service layer architectures (e.g., ETSI M2M, OMA LWM2M, and oneM2M). Fig. 3 illustrates an example networking protocol stack 300 that is typical, and thus Fig. 3 shows where an M2M service layer resides in a typical networking protocol stack.

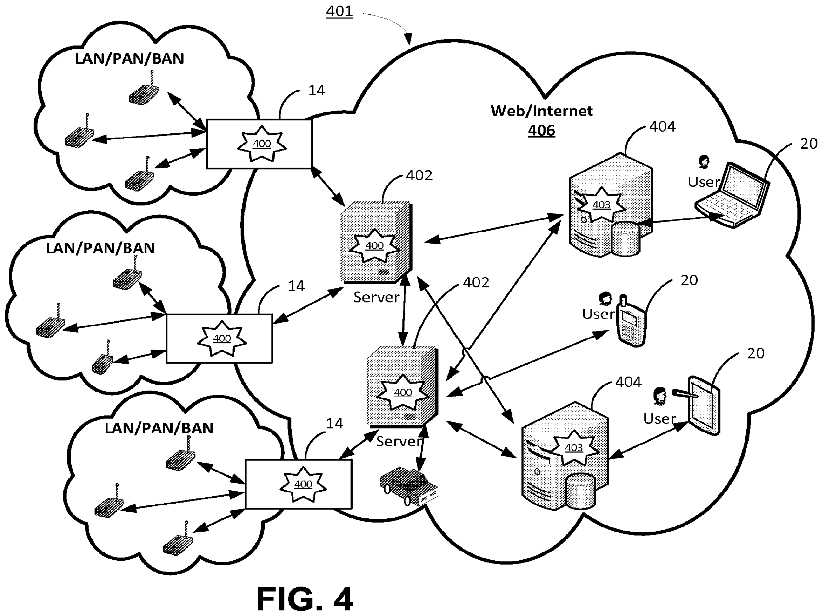

Referring now to Figs. 4-6, in accordance with various example embodiments, the M2M crawler service 400 described below can be implemented as a particular type of service/capability within various M2M service layers. In one embodiment, the crawler service 400 is implemented in accordance with oneM2M. In another embodiment, the crawler service 400 is implemented in accordance with ETSI M2M. Further, it will be understood that the M2M crawler service 400 is not limited to being implemented within an M2M service layer. For example, the M2M crawler service 400 can be implemented as a standalone Web service in accordance with yet another example embodiment.

It is recognized herein that enhanced versions of Web crawlers, indexers, and search engines may allow Web users to find available M2M devices in a similar fashion as they find Web content today such that M2M devices may be fully integrated into the IoT/WoT. By way of example, enhanced web crawlers, indexers, and search engines may find sensors deployed in public spaces (e.g., shopping malls, cities, stadiums, airports, museums, etc). It is recognized herein that making M2M devices searchable in this manner may increase awareness of M2M devices that are available as free public services (e.g., weather, traffic, etc), as well as M2M devices that are available for a fee. It is acknowledged in this disclosure that, for some use cases, making M2M devices searchable may not be desired and/or applicable. For example, it may not be desirable to make M2M devices searchable where privacy or security is a concern (e.g., healthcare sensor devices, security devices, etc).

There may have been attempts to address similar problems as this disclosure addresses, but not using the approaches described herein. For example, example embodiments described herein do not leverage IMS network components, nor are they based on real-time processing of search engine requests or leveraging of information from social networks. Instead, for example, embodiments described herein define services to enable existing Web crawlers to effectively and efficiently crawl M2M devices.

As described above, the current Web lacks capabilities to efficiently and effectively crawl M2M devices. As result, M2M devices are unable to be effectively indexed and searched by Web search engines (e.g. ,Google, Yahoo!, etc), and thus by Web users.

For example, current M2M devices may lack the capabilities to support the current Web crawler framework. In the current Web, websites are typically responsible for registering to Web crawlers and servicing their own Web crawler traffic. But M2M devices are often constrained in nature and lack the resources and intelligence to register to Web crawlers and service Web crawler requests. Unlike traditional websites, M2M devices are typically not actively managed by a webmaster (a human being). As a result, M2M devices may not able to perform various actions such as, for example, registering themselves to different search engines on the Web. Further, M2M devices might not have the capability to service requests from a large number of Web crawlers.

By way of another example, the current Web framework lacks services to assist M2M devices so that M2M devices can be effectively crawled. For example, existing M2M service layers referenced above (e.g., ETSI M2M, OMA LWM2M, oneM2M) may lack proper support for proactively discovering and publishing M2M device crawler metadata to Web crawlers in a format that the Web crawlers understand (e.g., Sitemap protocol). As a result, existing Web crawlers may lack awareness of M2M devices, the resources that the M2M devices support, and attributes pertaining to those resources. Existing M2M service layers also may lack the capability to generate crawler events (e.g., events indicating M2M devices require crawling/re-crawling). M2M service layers may also lack support for forwarding of these events to Web crawlers to notify them if/when one or more M2M devices need to be re-crawled due to the creation, modification, or deletion of device resources. This may be due to current M2M service layers operating in a primarily passive manner with regard to M2M devices. Current M2M service layers rely on devices to initiate interaction with the service layer (e.g., register to the service layer, store data in the service layer, etc). Thus, existing M2M service layers may lack the capability to proactively initiate interaction with M2M devices. For example, the current M2M service layers may lack the capability to proactively discover M2M devices or resources hosted on M2M devices, or to subscribe and receive notifications from devices, such as notifications associated with crawler events that can be generated if/when device resources have been created/modified/deleted. Current M2M services also lack the capability to proactively crawl M2M device resources on a re-occurring basis (e.g., retrieve a device's resources either periodically or based off of an event) and store/cache local copies of the resources. As a result, current M2M service layers may lack the capability to track and detect new, modified, or deleted resources, and thus lack the capability to determine whether Web crawlers should be notified that re-crawling is warranted.

By way of yet another example, Web crawlers may lack support for event-based crawling in the current Web. For example, Web crawlers typically re-crawl Web servers in a haphazard fashion (e.g., when encountering a link to a Web server from another Web server) or in a periodic fashion to refresh their crawled content (e.g., based on some preferred frequency specified by the Web server in its Sitemap or Robots.txt file). These types of crawling can be inefficient, for example, because re-crawling of a Web server may be performed even when a Web server's content has not been updated. In addition, many M2M devices may not be available (e.g., they may be sleeping) when a Web crawler attempts to crawl them. Because many M2M devices change in an unpredictable and event-based manner, it is recognized herein that a lack of event-based crawling can lead to inefficient and/or unnecessary crawling and re-crawling of M2M devices, which can have a negative impact on resource constrained M2M devices and networks.

As described herein, the M2M crawler service 400 may address the problems identified above, among others. The M2M crawler service 400 may enable M2M devices to be efficiently and effectively crawled by Web crawlers. As a result, M2M devices are able to be effectively indexed and searched by Web search engines (e.g., Google, Yahoo!, etc), and thus by Web users who use the Web search engines. Thus, the M2M crawler service 400 may serve as a key enabler for integration of M2M devices into the Internet/Web of Things.

The M2M crawler service 400 may provide capabilities to assist resource constrained M2M devices with registering to Web crawlers. In accordance with an example embodiment, the M2M crawler service 400 also supports proactively interacting with M2M devices to discover and crawl resources hosted on the device as well as to configure and subscribe to crawler events generated by the device. In addition, the M2M crawler service 400 may service Web crawler requests on behalf of M2M devices such that M2M devices do not become overloaded.

In one embodiment, the M2M crawler service 400 assists Web crawlers with crawling M2M devices. The M2M crawler service supports proactively crawling and storing of crawled M2M device resources and making these results available to Web crawlers. In doing so, for example, Web crawlers do not have to directly crawl the M2M device resources, which can be problematic especially for M2M devices having long and unpredictable sleep cycles. Instead, Web crawlers can crawl cached/stored versions of M2M device resources that have been proactively crawled in advance by the M2M crawler service 400. The M2M crawler service 400 may also generate crawler events, for example, based on detected changes in a state of device resources that it has crawled. The M2M crawler service 400 may publish these events to Web crawlers.

Referring now to Fig. 4, an example M2M system 401 includes a plurality of devices, such as M2M/Web servers 402, search engine servers 404, M2M gateways 14, which can also be referred to as web proxies 14. The illustrated devices can communicate with each other via the Web or Internet 406. The M2M system 401 further includes applications 20 and the M2M crawling service 400. The illustrated devices can generally be referred to as nodes. Thus, as shown, the M2M crawler service 400 can be deployed in various nodes in the network such as, for example, in M2M gateways 18, M2M servers 402, Web proxies 14, and Web servers 402. Existing Web crawler services 403 can be deployed on the search engine servers 404, which can be provided and operated by search engine companies, such as Google or Microsoft for example. The M2M crawler service 400 can be deployed as capabilities in a horizontal services layer, such as the service layer 22 for example, and the service layer may include a service capability server (SCS), an M2M server, a oneM2M server, or the like. Thus, the M2M crawler service can be deployed in various services layers, such as ETSI M2M, oneM2M, or OMA LWM2M for example. Alternatively, the M2M crawler service 400 can be deployed as a standalone Web service and can be made available to Web applications and/or other Web services. Thus, the M2M crawling service can be used to complement existing Web crawlers, or they can be deployed independently as separate dedicated M2M crawlers.

Various embodiments described herein refer to the system 401 for convenience. It will be appreciated that the example system 401 is simplified to facilitate description of the disclosed subject matter and is not intended to limit the scope of this disclosure. Other devices, systems, and configurations may be used to implement the embodiments disclosed herein in addition to, or instead of, a system such as the system 401, and all such embodiments are contemplated as within the scope of the present disclosure.

For an introduction of various functionality of the M2M crawler service 400, consider an example use case in which an M2M sensor company that has contracted with a shopping mall to allow it to deploy its wireless network sensors in the mall's parking lots, stores, and public areas. The sensors track statistics about shoppers such as who they are (e.g., age, sex, etc.), what they buy, how much they buy, when they shop, what kind of vehicles are in the parking lot, etc. Thus, the sensors monitor and contain various resources related to shoppers. The M2M sensor company has agreed to pay the mall a fee for letting it deploy its sensors throughout the mall. In return, the M2M sensor company plans to make its sensor data (resources) available (for a fee) to a diverse set of perspective clients such as retail store owners, retail goods manufactures, and advertisers for example. These clients may be interested in obtaining this information so that they can make more intelligent marketing, product placement, and product development decisions. For example, the owner of a nearby electronic billboard may like to discover these M2M sensor devices and connect to their sensor feeds so that he or she can more intelligently select which advertisement to display at which time of the day, week, or year.

Continuing with the example use case above, the M2M sensor company may want to maximize the number of clients who can discover and access the information streamed from its sensors in the mall. To facilitate this, in accordance with the example scenario, the M2M sensor company can network their sensors to make them accessible via the Internet/Web and can use the M2M crawler service 400 to ensure that their sensors can be found by commonly used Web search engines (e.g., Google, Yahoo!, Bing, etc).

With continuing reference to the example use case described above, in accordance with an example embodiment, the M2M crawler service 400 may function as a crawler proxy for the M2M sensor devices. The M2M crawler service can proactively and intelligently crawl each M2M device based on crawler events generated by the sensors and the sleep state of each sensor. The crawler service 400 can support re-crawling of the individual sensors in an event-based manner. By way of example, the crawler service 400 can support re-crawling a given sensor when the sensor signals a change in its state to the crawler service 400. For each sensor that has been crawled, the crawler service 400 can cache/store the sensor reading along with metadata used to describe the sensor data. Example metadata can indicate, without limitation, a sensor location, a type of sensor, a format of sensor data, a time since the sensor data was updated, or the like. The crawler service 400 may then proactively publish links (e.g., URIs) to these cached/stored sensor readings (resources). The crawler service 400 may also publish metadata associated with the sensors, such as descriptions of the sensors and events indicating when to re-crawl each sensor, for example. The information may be published to various Web search engines (e.g., Google, Yahoo!, Bing, etc). Using this published information, Web search engines may crawl and index the cached/stored sensor readings, which can generally be referred to as resources or resource representations, and which can enable the sensors to be effectively searched by clients using the same Web search engines they use to find traditional Web sites. As described further below, this can be done without introducing a large amount of overhead on the sensors, for example, because the various Web search engines are not directly accessing the sensors. Instead, the Web search engines may access cached/stored versions of the crawled resource representations stored by the Web crawler service on behalf of the sensors. In addition, in accordance with an example embodiment, the crawler service 400 may detect changes to sensor resources that it has crawled (e.g., new/updated resources). Based on such detections, the crawler service 400 can efficiently re-crawl the sensors and generate crawler events to Web search engines so that they can perform crawling of sensor resources in an event based manner rather than in periodic fashion.

Once sensor resources have been successfully crawled and indexed by Web search engines, the Web users can use the Web search engine to find sensors of interest. When a Web user accesses the stored/cached sensor data, the Web crawler can also provide various services, such as charging/billing services for example, that enable the M2M sensor company to charge users for access to the information. Though the above-described example use case is presented in the context of M2M sensors, it will be understood that the sensors are used for example purposes, and thus the M2M crawling service 400 can provide service to any M2M device as desired.

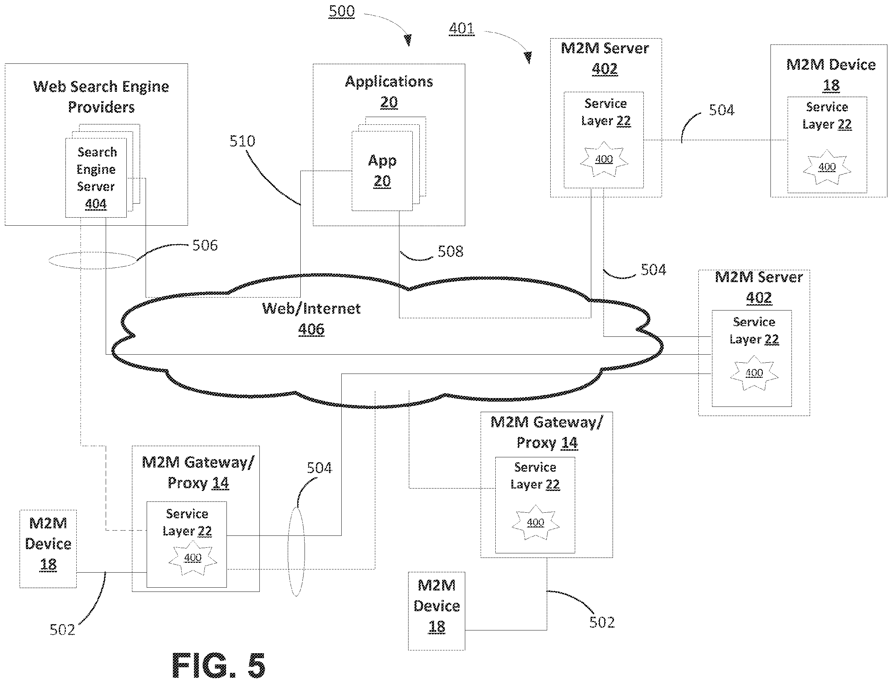

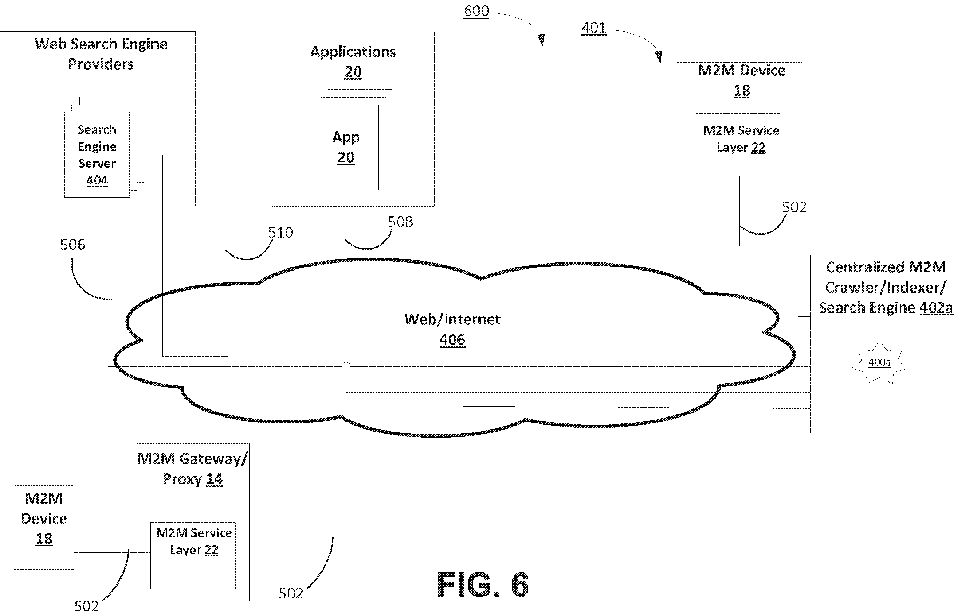

Referring to Fig. 5, in accordance with an example embodiment, the M2M crawler service 400 can be implemented by a distributed architecture, such as an example distributed architecture 500. Alternatively, referring to Fig. 6, in accordance with another example embodiment, the M2M crawler service 400 can be implemented by a centralized architecture, and thus can be referred to as a centralized M2M crawler service 400a. Fig. 6 depicts an example centralized architecture 600 that includes the centralized M2M crawler service 400a. The distributed architecture 500 may define multiple instances of the M2M crawler service 400. As shown, the instances can be hosted on various M2M nodes through the system 401, such as M2M servers 402, M2M gateways 14, and M2M devices 18 for example. Referring to Fig. 6, in accordance with the illustrated embodiment, the centralized architecture 600 defines a single M2M crawler service instance that is hosted on a centrally located M2M node, for instance an M2M server 402a. The distributed architecture 500 may enable crawling to be performed in a more parallel manner and may enable greater scalability as compared to the centralized architecture 600. The centralized architecture 600 may simplify management of the crawler service 400, for example, because the crawler service 400 can be hosted on a centralized server or server farm.

Referring again to Fig. 5, the instances of the M2M crawler service 400 in the distributed architecture 500 can allow M2M servers 402, M2M gateways/proxies 14, M2M devices 18, and M2M Applications 20 that are owned, operated, and/or affiliated with one or more M2M service providers and that host M2M resources, to be crawled, indexed, and searched. As shown in Fig. 5, the M2M crawler service 400 can be hosted on one or more M2M servers 402, one or more M2M gateways/proxies 14, and/or one or more M2M devices 18 in the network. Thus, the M2M crawler service instances can be used to efficiently crawl M2M resources that are hosted by the M2M nodes in the network in accordance with a distributed manner. The instances of the M2M crawler service 400 may collaborate with each other, as further described below.

Referring again to Fig. 6, the centralized M2M crawler service 400a can allow M2M servers 402, M2M gateways/proxies 14, M2M devices 18, and M2M Applications 20 that are owned, operated, and/or affiliated with one or more M2M service providers and that host various M2M resources to be crawled. The centralized M2M crawler service 400a is hosted in a centralized fashion within the network such that the M2M crawler service 400a can be used to efficiently crawl various M2M resources in the network.

Referring now to Figs. 5 and 6, several interfaces will now be described. A first interface 502 is defined between the M2M devices 18 and the M2M crawler service 400, which refers to either the centralized M2M crawler service 400a or an instance of the distributed M2M crawler service. The first interface 502 can enable the M2M crawler service 400 to discover and crawl M2M devices 18 and resources associated with the M2M devices 18. A second interface 504 is define between instances of the M2M crawler service 504. The second interface 504 can enable collaboration between distributed instances of the M2M crawler service 400 to distribute crawler metadata and results across a group or hierarchy of service instances, as further described below. A third interface 506 is defined between the web search engine server 404, which may include a traditional web crawler, and the M2M crawler service 400. The third interface 506 can enable Web search engines to interact with M2M crawler services. A fourth interface 508 is defined between M2M applications 20 and the M2M crawler service 400. The fourth interface 508 can enable M2M applications 20 to interact with the M2M crawler service 400. The fifth interface 510 is defined between the applications 20 and the web crawlers hosted on the search engine servers 404. The fifth interface 510 can enable applications 20 to indirectly search and find M2M devices using Web search engines that are enabled by M2M crawler services.

As described further below, the M2M crawler service 400 may support capabilities that allow various M2M devices to publish M2M crawler metadata over the first interface 502. In accordance with an example embodiment, various M2M devices can be proactively queried to obtain M2M crawler metadata, for example, in cases where a given M2M device hosts crawler metadata but is not capable of publishing it over the first interface 502. M2M crawler metadata can be auto-generated and/or enriched, for example, in scenarios where a given M2M device does not host M2M crawler metadata, or when the M2M crawler service 400 has additional crawler metadata that it can add. Via the first interface 502, crawler metadata that is hosted on a given M2M device may be configured, for example, to control crawler events generated by the M2M device. The M2M service 400 may use M2M crawler metadata to proactively and autonomously crawl M2M devices over the first interface 502. Thus, new/updated resource representations may be retrieved in an intelligent and efficient manner that does not overload the devices (e.g., event-based crawling based on changes in device state). In some cases, the M2M crawler service 400 can interact with Web crawlers on behalf of M2M devices over the third interface 506, such that Web crawlers are aware of M2M devices but do not overwhelm the devices with crawler traffic. For example, the M2M service 400 may share M2M device crawler metadata with Web crawlers such that Web crawlers are aware of M2M devices. The M2M service 400 may share crawled M2M device resource representations (current or past) and use these representations to detect changes in a resource state of a given M2M device. The resource representations may further be used to service Web crawler requests on behalf of M2M devices. For example, crawler requests may be offloaded from M2M devices. Crawler events may be generated to Web crawlers such the Web crawlers can support re-crawling based on events instead of, or in addition to, periodic re-crawling. The M2M crawling service 400 may allow a Web crawler to configure crawler metadata hosted by the M2M crawler service 400 to control crawler events generated by the M2M crawler service 400. In accordance with another embodiment, multiple instances of M2M crawler services within a network can collaborate with each other over the second interface 504. The M2M crawler services may collaborate with each other to share M2M crawler metadata, to share crawled resource representations, to subscribe to or generate crawler events, or the like. Further, in an example embodiment, M2M applications 20 may access M2M device crawler metadata over the interface 508, and M2M applications 20 may access crawled M2M device resources, which can also be referred to as resource representations. In accordance with another example embodiment, M2M applications may subscribe to crawler events, as further described below.

M2M crawler metadata will now be described in greater detail. In some cases, for a given M2M device to be efficiently and effectively crawled, certain types of information about the device and its resources may need to be known. Such information may be referred to as M2M crawler metadata. Table 2 defines an example list of M2M crawler metadata that can be used by the M2M crawling service 400, though it will be understood that additional or alternative crawler metadata can be used by the M2M crawler service as desired. The metadata generally supports efficient and effective crawling of M2M resources hosted on M2M devices. M2M crawler metadata can be generated or hosted by M2M devices and/or by the M2M crawler service 400. M2M crawler metadata can also be shared with other entities in the network, such as Web crawlers and/or applications.

**Table 2**

| **M2M Crawler Metadata Attributes** | **Abbrev** | **Description** |
|---|---|---|
| Device Name | dn | Identifier of device, gateway, server |
| Device Type | dt | Categorization of device (e.g., light switch, thermostat, door lock, gateway, server, etc.) |
| Device Location | dl | Location of device (e.g., geo-location, relative location (indoors, bedroom, etc)) |
| Crawling Proxy | cp | Can be used to specify whether a device requires a crawler proxy to service crawling requests on its behalf |
| Min Device Crawling Interval | min_dci | Defines the Min interval before the same crawler should re-crawl the M2M device. |
| Max Device Crawling Interval | max_dci | Defines the Max interval before the same crawler should re-crawl the M2M device |
| Device Crawler Event(s) | dce | One or more device-based crawler events having trigger conditions that can be dependent on the state of multiple device resources. Event can be used to trigger re-crawling of applicable device resources. Event can be configurable and/or a built-in native event supported by the device. Can support the following types of sub-attributes, which are described in more detail below. |
| | | • Crawler event description |
| | | • List of crawler event subscribers |
| | | • List of crawler event trigger conditions |
| Resource Address | addr | List of resources supported by device (e.g., list of URIs) |
| Resource Type | rt | The type of each resource (event resource, control resource, etc.) |
| Resource Crawling Priority | p | The level of importance or priority, relative to other resources hosted on the device, in which this resource should be crawled. |
| Resource Operations | ro | The supported operations on the resource (e.g., Read, Write, Delete) |
| Do Not Crawl | dnc | Whether or not a resource should be crawled or not. |
| Min Resource Crawling Interval | min_rci | Defines the Min interval before the same crawler should re-crawl a particular M2M device resource |
| Max Resource Crawling Interval | max_rci | Defines the Max interval before the same crawler should re-crawl a particular M2M device resource |
| Resource Crawling Event(s) | rce | One or more resource-specific crawler events whose trigger condition is dependent on the state of a particular device resource. Event can be used to trigger re-crawling of applicable device resource. Event can be configurable and/or a built-in native event supported by the device. Can support the following types of sub-attributes, presented by way of example and not by way of limitation: |
| | | • Crawler event description |
| | | • List of crawler event subscribers |
| | | • List of crawler event trigger conditions |
| Resource Content Type | ct | Type of content associated with each of the device's resources (e.g., JSON, XML, Text, etc) |
| Keywords | kw | The recommended keywords or semantic description that an indexer should use when indexing each of the device's resource representations. |
| Sleep Schedule/State | ss | Can be used to specify the current sleep state of a device or its sleep schedule |
| Parent Resource | pr | Parent resource of a resource |
| Child Resource(s) | cr | List of one or more child resources of a resource |
| Sibling Resource(s) | sr | List of one or more sibling resources of a resource |
| Persistent | ptr | This Boolean value indicates if the data that is represented in the resource is persistent. Persistent data always has meaning. For example, a temperature sensor may indicate that at 10:02 AM on 9/4/2013 it is 75 degrees Fahrenheit. Later, this temperature reading may be updated, but the old value is still valid and has value. |
| Next Update Time | nut | The next time the resource is scheduled to be updated with a new value. |

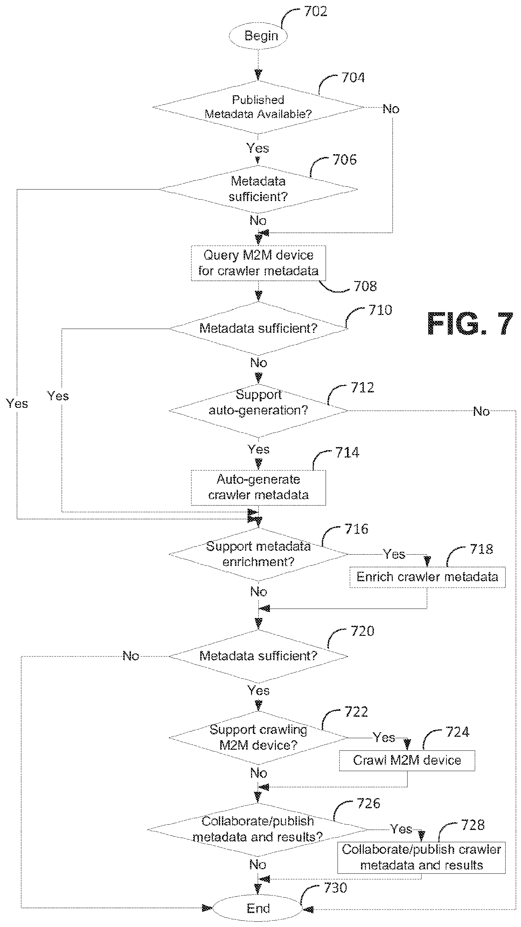

Referring to Fig. 7, an example method that can be performed using the crawler service 400 is depicted. At 702, the method may be triggered, for example and without limitation, by a new device registering to the crawler service 400 or a notification of a crawler event being received by the crawler service 400. At 704, in accordance with the illustrated embodiment, the crawler service 400 may determine whether published crawler metadata associated with a given device is available. In accordance with an example embodiment, an M2M device can explicitly publish M2M crawler metadata (e.g., see Table 2) to the M2M crawler service 400 over the first interface 502. Thus, the M2M crawler service 400 can support a capability over the first interface 502 that allows M2M devices 18 to publish their M2M crawler metadata directly to the M2M crawler service 502. Alternatively, other services with which the M2M crawler service 400 collaborates may support receiving published M2M crawler metadata from M2M devices 18. In some cases, M2M crawler metadata, such as the metadata depicted in Table 2 for example, can be published by a M2M device when the M2M device registers to the M2M crawler service 400 or when the M2M device registers to another service with which the M2M crawler service 400 collaborates.

By way of example, using the described-herein M2M crawler metadata publishing capability, a mobile M2M device (e.g., a telemetry sensor in a car) can provide an update to the M2M crawler service 400 concerning its resource links if/when they change due to mobility (e.g., a change in a location of the M2M device). For example, because the M2M device may be assigned a new IP address when the devices changes network domains, the "host" component of its URIs may also change. If the URIs associated with the M2M device change, for example, then the M2M device can use the M2M crawler metadata publishing capability to update the M2M crawler service 400, and thus update Web crawlers of the changes.

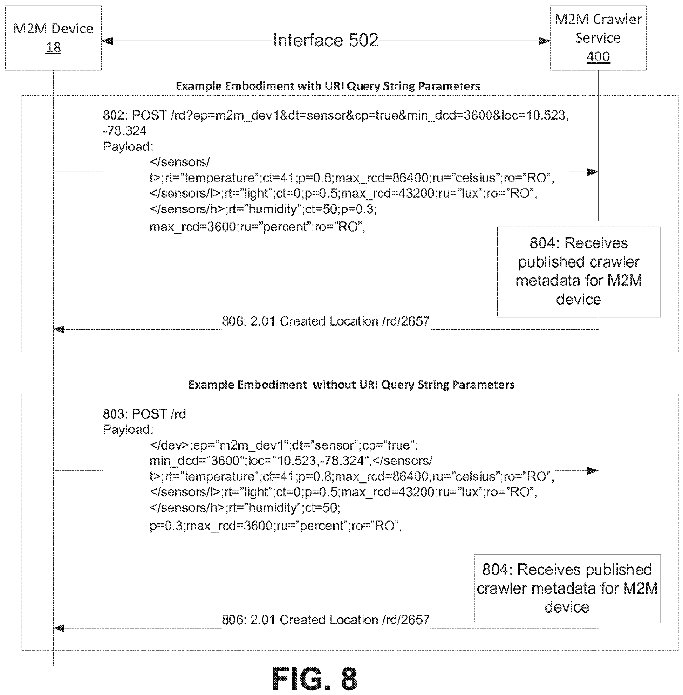

Referring to Fig. 8, an example embodiment is shown in which an M2M device 18 publishes M2M crawler metadata, in accordance with a representational state transfer (RESTful) architecture, to the M2M crawler service 400 the first interface 502. For additional context, a RESTful architecture is described in terms of the constraints applied to components, entities, connectors, and data elements used in the architecture rather than in terms of physical component implementation or communications protocols used. Thus, the roles and functions of the components, entities, connectors, and data elements will be described. In a RESTful architecture, representations of uniquely addressable resources are transferred between entities. When handling resources in a RESTful architecture, there are basic methods that may be applied to resources, such as Create (create child resources), Retrieve (read the content of the resource), Update (write the content of the resource) or Delete (delete the resource.) One skilled in the art will recognize that implementations of the instant embodiments may vary while remaining within the scope of the present disclosure. One skilled in the art will also recognize that the disclosed embodiments are not limited to implementations using the oneM2M that is used herein to describe exemplary embodiments. The disclosed embodiments may be implemented in architectures and systems, such as ETSI M2M, and OMA LWM2M, and other related M2M systems and architectures. With continuing reference to Fig. 8, an enhanced version of the constrained RESTful environment (CoRE) Resource Directory (RD) registration interface protocol can be used to support extensions for the M2M crawler metadata attributes, such as those attributes defined in Table 2 for example.

For example, in accordance with the illustrated example, at 802, the M2M device 18 sends a CoRE RD registration request to the M2M crawler service 400. In accordance with one illustrated embodiment, the CoRE RD registration request carries device-centric M2M crawler metadata defined in Table 2 in new URI query string parameters within the CoRE RD registration request. Examples of metadata includes, presented without limitation, the type of device (dt=sensor), whether the device requires a crawler proxy (cp=true), the minimum delay between successive crawler requests (min_dcd=3600), and the location of the device (loc=10.523, -78.324). At 804, the M2M crawler service receives the published crawler metadata that is associated with the M2M device. Alternatively, referring to 803, rather than carrying device-specific crawler metadata in URI query string parameters, the metadata can instead be carried within the CoRE RD registration request payload that also supports new extensions to support crawler metadata. At 804, in accordance with both of the illustrated examples shown in Fig. 8, the M2M crawler service receives the published crawler metadata that is associated with the M2M device 18. At 806, upon receiving the published crawler metadata, the M2M crawler service 400 can parse the received metadata to discover information about the M2M device 18, such as, for example and without limitation, the type of device, whether the device requires a crawler proxy, the minimum delay between successive crawler requests, crawler priority, and the location of the device. The M2M crawler service 400 can store this information and can use this information to dertermine how and/or when to perform crawling of the M2M device 18 in the future.

Thus, a first or M2M node, which may host the M2M crawler service 400 for example, may receive crawler metadata associated with an M2M device. The M2M node may crawl the M2M device for one or more resources in accordance with the received crawler metadata. Further, the M2M node may the publish the one or more resources such that the one or more resources can be discovered by at least one of a web crawler, a service, or an application.

As shown in Fig. 8, resource-specific M2M crawler metadata defined in Table 2 can be carried within the CoRE RD registration request payload that supports new extensions to support crawler metadata. The existing CoRE RD registration request supports using the CoRE Link Format description syntax to describe resources. In accordance with an example embodiment, M2M crawler metadata specific to an individual resource can be carried in new Core Link Format attributes. Some examples include, presented without limitation, the crawling priority (p=0.8), the maximum delay between re-crawling attempts (max_rcd=86400), the resource units (ru="Celsius"), and the supported resource operations (ro="RO").

Referring again to Fig. 7, if it is determined at 704 that published metadata is not available, for instance because a given M2M device does not support publishing M2M crawler metadata to the M2M crawler service 400, then the process can proceed to 708, where the M2M crawler service 400 can query the M2M device over the first interface 502. The M2M device can be queried to discover M2M crawler metadata associated with the M2M device. The querying can be performed by the M2M crawler service 400 in a proactive and autonomous manner (e.g., without being invoked by an application) upon detecting a given M2M device, for example, when the device invokes the crawler service 400 and/or registers to the M2M crawler service 400.

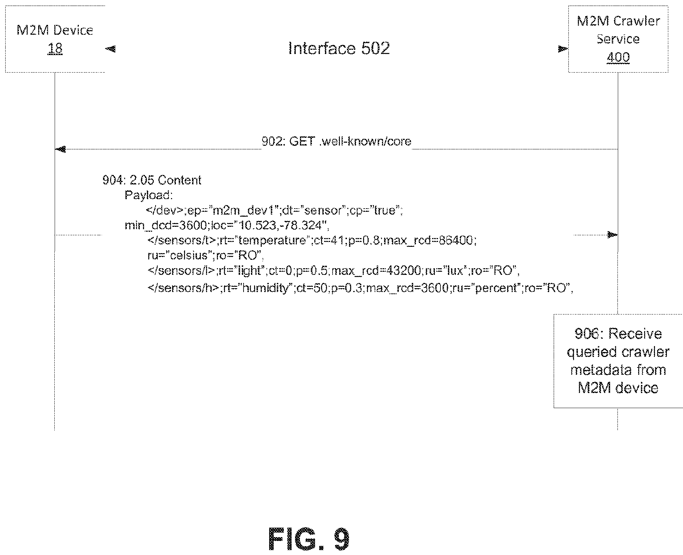

Fig. 9 depicts an example of the M2M crawler service 400 querying an M2M device 18 over the first interface 502. At 902, in accordance with the illustrated embodiment, the M2M crawler service 400 sends an enhanced version of the CoRE Link Format defined '.well-known/core' resource to the M2M device 18 that supports M2M crawler metadata extensions defined in Table 3. Thus, the M2M crawler service 400 may query the M2M device 18 by retrieving its '.well-known/core' resource. At 904, the M2M device 18 responds with its CoRE Link Format description that includes M2M crawler metadata extensions. Thus, at 906, the M2M crawler service 400 receives queried crawler metadata from the M2M device 18.

Thus, as described above, an M2M node, which may host the M2M crawler service 400 for example, may receive crawler metadata associated with an M2M device. The M2M node may crawl the M2M device for one or more resources in accordance with the received crawler metadata. Further, the M2M node may the publish the one or more resources such that the one or more resources can be discovered by at least one of a web crawler, a service, or an application. The M2M node may send a query to the M2M device for the crawler metadata, and the M2M node may receive the crawler metadata in response to the query.

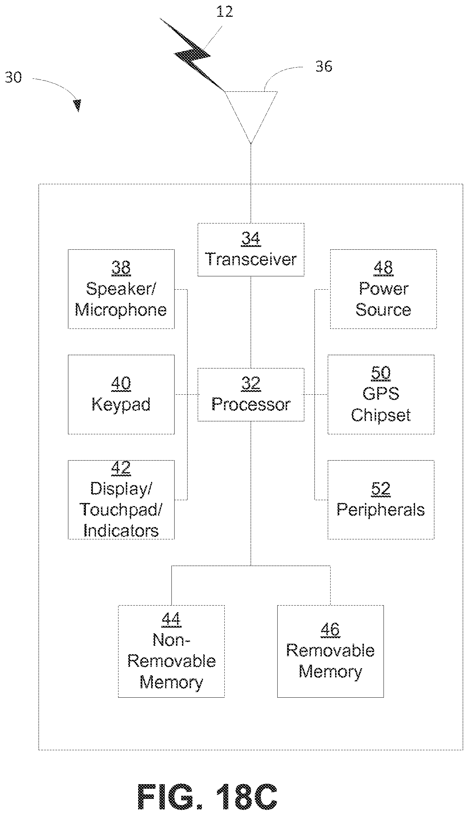

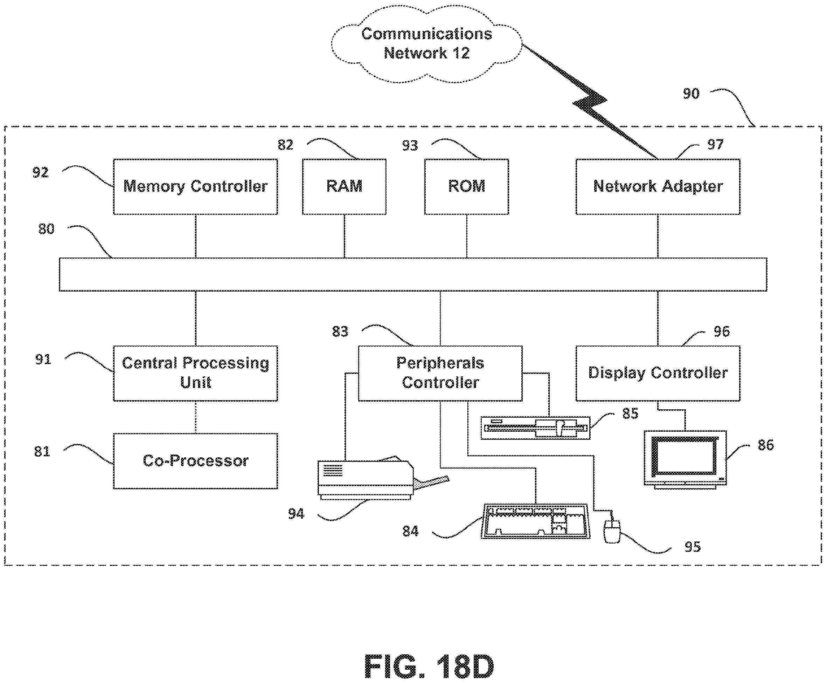

It will be understood that the entities performing the steps illustrated in Figs. 8 and 9 are logical entities that may be implemented in the form of software (e.g., computer-executable instructions) stored in a memory of, and executing on a processor of, a device, server, or computer system such as those illustrated in Fig. 18C or Fig. 18D. That is, the method(s) illustrated in Figs. 8 and 9 may be implemented in the form of software (e.g., computer-executable instructions) stored in a memory of a computing device, such as the device or computer system illustrated in Figs. 18C or 18D, which computer executable instructions, when executed by a processor of the computing device, perform the steps illustrated in Figs. 8 and 9.

M2M crawler metadata associated with an M2M device can be referred to as device-specific crawler metadata. Such metadata can be specified as attributes of a device specific resource (e.g. /dev) such as, for example and without limitation, the type of device (dt=sensor), whether the device requires a crawler proxy (cp=true), the minimum delay between successive crawler requests (min_dcd=3600), and the location of the device (loc=10.523, - 78.324). In some cases, M2M crawler metadata specific to an individual resource hosted on a given M2M device can be specified as attributes of the individual resource such as, for example and without limitation, the crawling priority (p=0.8), the maximum delay between re-crawling attempts (max_rcd=86400), the resource units (ru="Celsius"), and the supported resource operations (ro="RO"). Referring again to Fig. 7, at 710, the M2M crawling service may determine whether queried metadata is sufficient to crawl a given M2M device. For instance, the M2M device might not support mechanisms to publish M2M crawler metadata to the M2M crawler service 400 and to allow the M2M crawler service 400 to query and discover M2M crawler metadata. Thus, the process can proceed to step 712, where the M2M service determines whether the M2M device supports the auto-generation of crawler metadata. If the device does not support auto-generating crawler metadata, then, in accordance with the illustrated example, the process proceeds to 730, where it ends. If the M2M device supports auto-generating crawler metadata, then, in accordance with the illustrated example, the process proceeds to step 714, where crawler metadata is auto-generated.

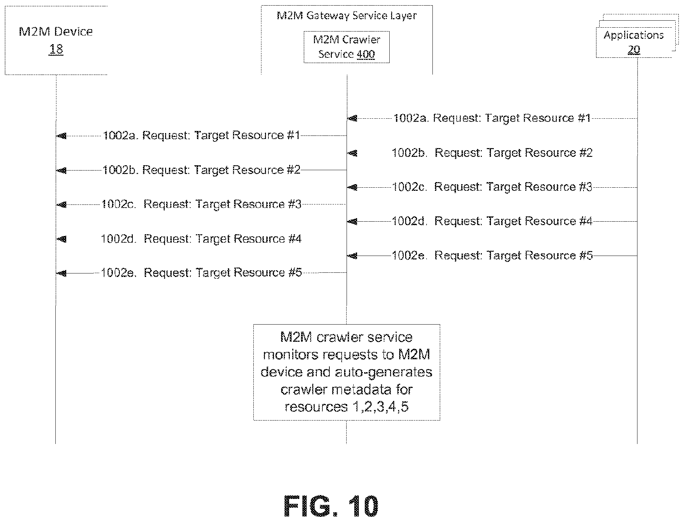

For example, referring to Fig. 10, crawler metadata can be auto-generated via the M2M crawler service 400 monitoring requests that targeting an M2M device 18 over the interface 502. The M2M crawler service extracts a list of resources that are targets of the monitored requests. As shown, the M2M crawler service 400 may be a part of a service layer 22 that is hosted on an M2M gateway 14 through which transactions targeting the M2M device 18 flow. As shown, the M2M crawler service 400 can inspect one or more requests 1002, for instance from applications 20, before sending the requests to the M2M device 18. As shown five requests are monitored (requests 1002a, 1002b, 1002c, 1002d, and 1002e), though it will be understood that any number of requests can be monitored and inspected as desired. Further, the M2M crawler service 400 may inspect responses from the M2M device 18. Further still, in accordance with an example embodiment, the M2M crawler service 400 may maintain a list of resources targeted by the requests 1002. This list can serve as M2M crawler metadata and may be used to perform future crawling of the M2M device 18. Thus, the M2M crawler service 400 may monitor requests to an M2M device, and the M2M crawler service 400 may auto-generate crawler metadata targeted for various resources of the M2M device.

Similarly, in accordance with another example embodiment, the M2M crawler service can monitor requests initiated by an M2M device, and use the monitored information to generate crawler metadata. For example, in some cases, M2M devices may initiate requests to mirror their resources to a proxy or gateway node. Such M2M devices may update the node on a periodic or event-based manner. By monitoring the requests and/or the resources targeted by these requests, the M2M crawler service 400 can auto-generate a list of resources supported by the M2M device. This list can also serve as M2M crawler metadata and may be used to perform future crawling of the M2M device.

Thus, in a system comprising a plurality of machine-to-machine (M2M) nodes comprising a first node (which may host the M2M service 400) and a plurality of M2M devices, wherein the plurality of M2M nodes communicate via a network, the first node may receive crawler metadata associated with at least one of the plurality of M2M devices. The first node may crawl the at least one M2M device for one or more resources in accordance with the received crawler metadata. Further, the first node may the publish the one or more resources such that the one or more resources can be discovered by at least one of a web crawler, a service, or an application. As described herein, the first node may monitor one or more requests that target the at least one M2M device. Based on the monitoring, the first node may determine context information associated with the least one M2M device. Further, based on the context information, the fist node may configure the crawler metadata associated with the least one M2M device such that the at least one M2M device can be crawled.

In addition, in accordance with another example embodiment, the M2M crawler service 400 may also run as a background service within an M2M service layer (or in collaboration with the M2M service layer) to regularly comb over the M2M service layer resources and extract crawler metadata from these resources. Such an embodiment may be useful for M2M-type devices that store their data within M2M service layer resources.

In another example, the M2M crawler service 400 can support generating M2M crawler metadata associated with an M2M device based on a type of the M2M device. For example, when invoking/registering to the M2M crawler service 400, an M2M device may publish its device type (e.g., ACME brand temperature sensor). Alternatively, the M2M crawler service 400 may discover the type by querying the device. In various example scenarios, knowing the device's type may allow the M2M crawler service 400 to infer the device's supported set of resources because, for example, some types of device's may have a standardized set of resources that they support. In some cases, the M2M crawler service 400 may include an internal library of M2M crawler metadata for different M2M device types, or the M2M crawler service 400 may leverage an external lookup directory/service to discover such information.

Referring again to Fig. 7, at 716, the M2M crawler service 400 may determine whether a given M2M device can support crawler metadata enrichment. If it is determined at 706 or 710 that the crawler metadata is sufficient to crawl a given M2M device, the process may proceed to step 716. Thus, the M2M crawler service 400 may be in a position to enrich M2M device crawler metadata that was published, queried, or auto-generated. In accordance with an example embodiment, enrichment is supported by leveraging a context or state that the M2M crawler service 400 collects, as further described below.

At 718, the M2M crawler service 400 can enrich crawler metadata. For example, the M2M crawler service 400 can collect context information by observing requests and/or responses flowing over the interface 502. Example attributes for enrichment are listed in Table 3 below, presented by way of example and not by way of limitation. It will be understood that other attributes may enrich metadata as desired.

**Table 3**

| **M2M Crawler Metadata Attribute (Enriched by M2M Crawler Service)** | **Abbrev** | **Description** |
|---|---|---|
| Resource State Change | rsc | Resource on M2M device created, updated, deleted |
| Resource Change Rate | rcr | How often the state of resource(s) on a M2M device is changing |
| Device State | ds | Whether M2M device is online or offline |
| Max Request Rate | mrr | Rate of requests which a M2M device can handle before being overwhelmed |

Referring to Table 3, the M2M crawler service 400 can use different mechanisms to observe this information in accordance with various embodiments. For example, the M2M crawler service 400 can actively monitor transactions flowing to/from a given M2M device over the interface 502 and abstract the monitored information. The monitoring and abstracting may be achieved without a great deal of added overhead and complexity. For example, by monitoring the targeted address (e.g., URI) within requests, the timestamp of requests, whether or not a given M2M device responds to requests, and the corresponding response code, the M2M crawler service 400 can observe context information, such as the context information listed above. Alternatively, the M2M crawler service 400 can collaborate with other services in the network to collect this information (e.g., by collaborating with other M2M crawler services over the interface 504).

Using the monitored information, for example, the M2M crawler service 400 can deduce (determine) higher level context information and use such information to configure crawler metadata such as, for example and without limitation, whether or not a given M2M device requires a crawler proxy to service crawler requests on its behalf; and a definition of crawling policies, such as a min/max delay or schedule that crawlers should use when determining when to re-crawl a given M2M device for example. Thus, based on context information associated with an M2M device, the M2M crawler service 400 can configure the crawler metadata associated with the M2M device such that the M2M device can be crawled.

The M2M crawler service 400 can implement different mechanisms to deduce this higher level context in accordance with various embodiments. For example, the M2M crawler service 400 can support a native set of algorithms and/or policies that the M2M crawler service 400 may use to deduce this type of context. The M2M crawler service 400 can also support a configurable and/or programmable set of algorithms and/or policies to deduce context. For example, if the M2M crawler service 400 detects that a given M2M device is not responding to crawler requests over the first interface 502, or is responding with an error response code such as a retry status for example, the M2M crawler service 400 may deduce that the M2M device is not able to keep up with processing crawler requests. In such a scenario, the M2M crawler service 400 can enrich the crawler metadata to tune the min/max crawler delays accordingly. Thus, based on context information associated with an M2M device, the M2M crawler service 400 can configure the crawler metadata associated with the M2M device such that the M2M device can be crawled. Alternatively, the M2M crawler service can proactively decide to function as a crawler proxy on behalf of a M2M device.

Referring again to Fig. 7, at 720, either after crawler metadata was enriched or after determining that metadata enrichment is not supported, the M2M crawler service 400 may determine whether the metadata is sufficient to crawl the M2M device. If the metadata is not sufficient, the process may proceed to 730, where it ends. If the metadata is sufficient, the M2M crawler service 400 may determine whether the M2M device can be crawled. If the M2M device can be crawled, the M2M device is crawled, at 724. Either after the M2M device is crawled or after it is determined that the M2M device does not support crawling, it is determined whether the M2M crawler service 400 can collaborate with other services to publish metadata and/or crawling results. If the M2M crawler service 400 does not collaborate, the process proceeds to step 730, where it ends. If the M2M crawler service can collaborate, the process proceeds to step 728, where the M2M crawler service 400 collaborates with other services to publish metadata and/or crawling results.

In an example embodiment, to support efficient event-based crawling (rather than periodic or random crawling) of M2M devices, the M2M crawler service 400 supports configuring M2M devices, subscribing to M2M devices, and receiving notifications of crawler events from M2M devices. For example, the M2M crawler service 400 may configure trigger conditions on M2M devices, so that the M2M crawler service 400 is notified when specific events occur. The M2M crawler service can also support native (fixed) trigger conditions of M2M devices. An example set of semantics is defined herein to support configurable crawler event trigger conditions. Table 4 illustrates an example set of semantics that are JSON based in accordance with an example embodiment. It will be understood that other alternative formats can also be used as desired, and additional or alternative semantics can be used by the M2M crawler service 400 as desired.

**Table 4**

| **Crawler Envent Trigger Condition Description** | **Crawler Event Trigger Condition Semanties** |
|---|---|
| The creation, update, deletion of a specified number of resources hosted on the device | "CrawlerTriggerConditions" : { |
| | "triggerConditionl": { |
| | "Ops": "C,U,D", |
| E.g., Trigger a crawler event if more than 10 resources are created, updated, or deleted | "NumOps": "10" |
| | } |
| | } |
| The value of one or more resources exceed a defined (predetermined) threshold(s) or are set to defined (pdetermined) value(s) | "CrawlerTriggerConditions" : { |
| | "triggerConditionl": { |
| | "Resource": "/a/b/c", |
| | "ValThreshold": "100", |
| E.g., Trigger a crawler event if the value of /a/b/c resource is greater than a value of 100 | "Condition": "GT" |
| | } |
| | } |
| The number of times one or more resources have been updated exceeds a defined (determined) threshold | "CrawlerTriggerConditions" : { |
| | "triggerConditionl": { |
| | "Resource": "/a/b/c", |
| E.g., Trigger a crawler event if the /a/b/c resource is updated more than 20 times | "Ops": "U", |
| | "OpsThreshold": "20", |
| | "Condition": "GT" |
| | } |
| | } |
| The number of new, updated, or deleted resources reaches a defined threshold | "CrawlerTriggerConditions" : { |
| | "triggerConditionl": { |
| | "Ops": "C,U,D", |
| E.g. Trigger a crawler event if the more than 500 create, update, and delete operations occur. | "OpsThreshold": "500", |
| | "Condition": "GT" |
| | } |
| | } |
| The device enters into a specific state (e.g. wakes up from sleeping, or battery is re-charged and exceeds a defined threshold) | "CrawlerTriggerConditions" : { |
| | "triggerConditionl": { |
| | "DeviceState": "Awake", |
| | "Condition": "EQ" |
| E.g. Trigger a crawler event if device transitions in the 'Awake' state. | } |
| | } |

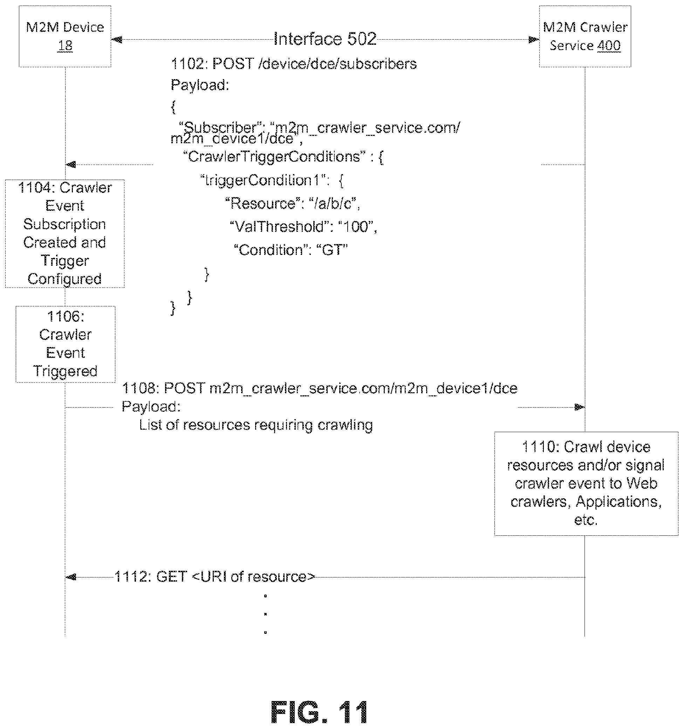

Referring now to Fig. 11, to support receiving notifications of crawler events from M2M devices over interface the first interface 502, the M2M crawler service 400 can subscribe to M2M devices to receive crawler event notifications. As part of a subscription, the M2M crawler service 400 can configure trigger conditions to control if/when the crawler event is generated by the device. Referring to Fig. 11, in accordance with the illustrated embodiment, the M2M crawler service 400 subscribes to crawler events generated by a M2M device 18. At 1102, the M2M crawler service 400 sends a subscription request to the M2M device 18. The illustrated M2M device 18 supports a device crawler event subscription resource (e.g., '/device/dce/subscriptions') that allows the M2M crawler service 400 to subscribe to crawler events using a RESTful POST operation. Included in the payload of the example subscription request is the trigger condition for the crawler event that uses the illustrated JSON formatted semantic descriptions specified in Table 4. Also included in the example subscription request is a callback URI that the M2M device 18 can use to send the crawler event to the M2M crawler service 400 if/when the trigger condition is satisfied. For example, at 1104, in response to the request, the crawler event subscription is created at the M2M device 18, and the trigger is configured at the M2M device 18. At 1106, the crawler event is triggered. At 1108, the crawler event, or a notification of the crawler event, is sent to the M2M crawler service 400. In accordance with the illustrated example, the crawler event is sent to the M2M crawler service 400 using a RESTful POST request. This request can include event information in its payload. Event information may include, for example, a list of URIs for resources requiring crawling/re-crawling. Upon receiving the crawler event, at 1110, the M2M crawler service 400 may decide whether to perform crawling of the M2M device 18 as described herein and/or whether to generate a corresponding crawler event to one or more Web crawlers as described herein. For example, at 1112, the M2M crawler service 400 may crawl one or more resources of the M2M device 18, based on receiving the notification associated with the crawler event.

Thus, a first or M2M node, which may host the M2M crawler service 400 for example, may receive crawler metadata associated with an M2M device. The M2M node may crawl the M2M device for one or more resources in accordance with the received crawler metadata. Further, the M2M node may the publish the one or more resources such that the one or more resources can be discovered by at least one of a web crawler, a service, or an application. As described above, the M2M node may send a subscription request to the M2M device. The subscription request may include a trigger condition associated with a crawler event, and the M2M device may be configured in accordance with the subscription request. When the trigger condition is satisfied, the M2M node may receive a notification of the crawler event. In response to receiving the notification, the M2M node may re-crawl the M2M device for a select resource of the one or more resources, wherein the select resource is defined in the subscription request. Alternatively, or additionally, in response to receive the notification, the M2M node may generate a second notification for one or more web crawlers.

As mentioned above, the M2M crawler service 400 can provide crawler proxy services to M2M devices, such as storing/caching representations of crawled resources for example. Such services may be useful various devices, such as M2M devices that do not register to an M2M service layer and/or do not store their resource representations within M2M service layer resources. The M2M crawler service 400 can perform this crawling in an autonomous/proactive manner by initiating the crawling, or the M2M crawler service 400 can also crawl based on an explicit event and/or request from a given M2M device. After crawling a M2M device, the M2M crawler service 400 can provide various services using the crawled information. For example, the M2M crawler service 400 can generate its own crawler events that are used by traditional Web crawlers. The generated crawler events may be based on, for example, the detection of newly added, created, or deleted device resources. The M2M crawler service 400 can also service Web crawler requests on behalf of M2M devices using cached/stored representations of the crawled M2M device resources. In doing so, M2M devices can be relieved (offloaded) from having to service a potentially large number of crawler requests.

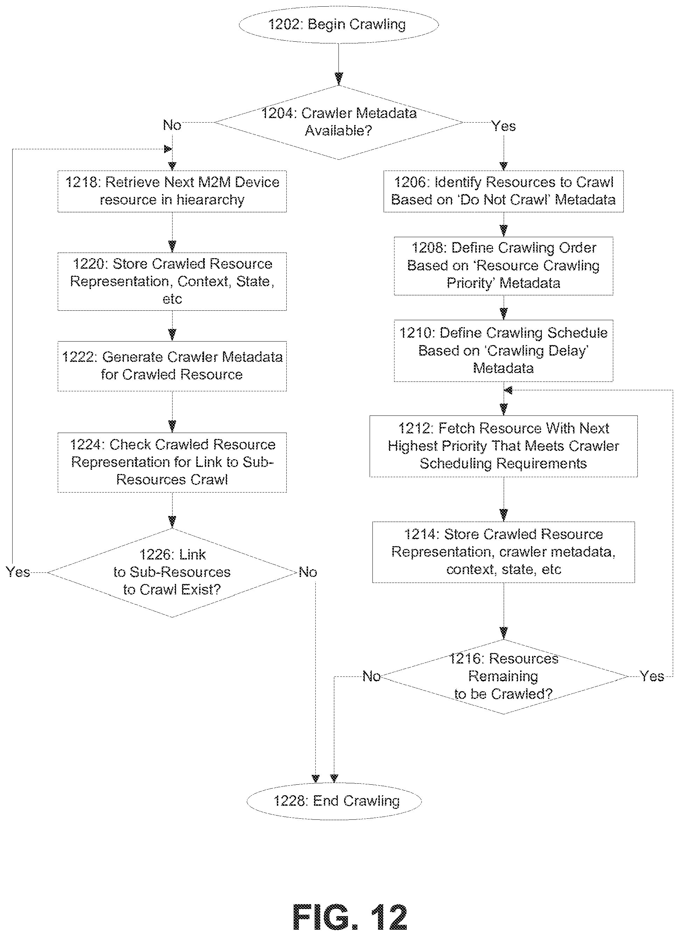

Referring now to Fig. 12, the M2M crawler service 400 may parse M2M crawler metadata to identify each resource hosted on a M2M device and crawler attributes that correspond to a resource. Based on the crawler attributes of each resource on a M2M device, the M2M crawler service 400 can determine which resources to crawl (e.g., based on 'do not crawl' attribute), the order in which to crawl the resources (e.g., based on 'persistent' attribute), and when to crawl the resources (e.g., based on the 'device crawler delay' and/or 'resource crawler delay' and/or 'next update time' attributes).

Referring to Fig. 12, in accordance with the illustrated example, the M2M crawler service begins crawling a given M2M device 18, at 1202. At 1204, the M2M crawler service 400 determines whether crawler data is available that is associated with the given M2M device. If crawler metadata is available, the crawler service 400 identifies resources to crawl based on metadata, such as 'Do Not Crawl' metadata for example. At 1208, the crawler service 400 determines a crawling order based on metadata associated with the M2M device, for example based on 'Resource Crawling Priority' metadata. At 1210, the crawler service 400 determines a crawling schedule based on metadata associated with the M2M device, for example based on 'Crawling Delay' metadata. At 1212, the crawler service 400 may fetch the resource associated with the highest priority that has not already been fetched. The fetched resource may also meet the crawler scheduling requirements defined by the metadata. At 1214, in accordance with the illustrated example, the crawler service 400 may store various information associated with crawling, such as the crawled resource representation, crawler metadata, context information, state information, or the like. At 1216, the crawler service 400 determines whether there are resources that still need to be crawled. If there are resources that need to crawled, the process returns to step 1212. If there are no more resources that need to be crawled, crawling ends, at 1228.

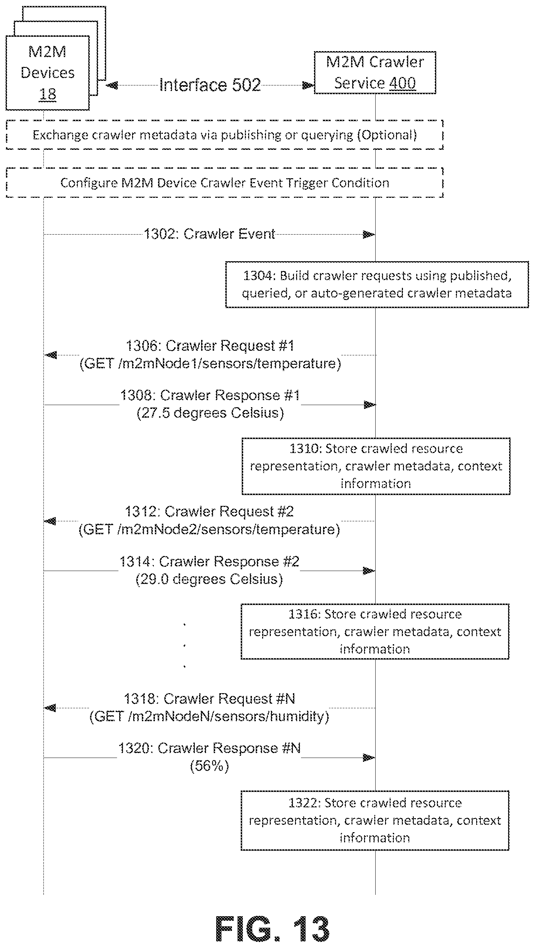

Thus, as described above, for each resource that is crawled, the M2M crawler service 400 can fetch a resource representation from the M2M device and store/cache the resource representation (e.g., either locally or in a network storage area), as further described below with reference to Fig. 13. The crawling can be done in a proactive/autonomous fashion or in an event-based fashion. For example, the M2M device can trigger an event to the M2M crawler service to initiate the crawling, at 1202. The trigger condition for the crawler event can be configured on the M2M device by the M2M crawler service 400 as described above. The M2M crawler service 400 can also store additional information with the resource. For example, information contained in the M2M crawler metadata can be stored with the crawled resource representation (e.g., device type or resource type that from which the representation originated, content type of the representation, resource units, and keywords to extract from the representation when indexing it, links to related parent/child/sibling resource representations, etc). Further, at 1214, context and/or state information that the M2M crawler service 400 observes/collects can also be stored with the crawled resource representation (e.g., timestamp, location, events that triggered crawling, representations and/or links to other resources having relationship to this resource, etc).

With continuing reference to Fig. 12, if it is determined that crawler metadata is not available at 1204, the crawler service 400 may retrieve another, for instance the next, M2M device resource in a hierarchy, at 1218. At 1220, the crawled resource representation is stored, and other information may be stored with the crawled resource representation. At 1222, the crawler service 400 generates crawler metadata that is associated with the crawled resource. At 1224, the crawler service 400 checks the crawled resource representation for a link to a sub-resource that should be crawled. At 1226, the crawler service 400 determines whether the sub-resource exists. If the sub-resource exists, the process returns to step 1218 so that the sub-resource can be crawled. If no sub-resource exists, crawling concludes at 1228.

It will be understood that the entity performing the steps illustrated in Fig. 12 is a logical entities that may be implemented in the form of software (e.g., computer-executable instructions) stored in a memory of, and executing on a processor of, a device, server, or computer system such as those illustrated in Fig. 18C or Fig. 18D. That is, the method(s) illustrated in Fig. 12 may be implemented in the form of software (e.g., computer-executable instructions) stored in a memory of a computing device, such as the device or computer system illustrated in Figs. 18C or 18D, which computer executable instructions, when executed by a processor of the computing device, perform the steps illustrated in Fig. 12.

Referring also to Fig. 13, the M2M crawler service 400 can support crawling without the use of M2M crawler metadata in accordance with an example embodiment. For example, the M2M crawler service 400 can recursively 'walk' a given M2M device by first retrieving and storing the device's base resource representation, and then examining it to see if the resource representation contains links to any sub-resources. For example, at 1302, the M2M crawler service 400 is notified of a crawler event. At 1304, the M2M crawler service 400 may build one or more crawler requests using published metadata, metadata received from querying, or auto-generated metadata, as described above. At 1306, the M2M crawler service 400 sends a first crawler request to a first M2M device 18. In response to the request, at 1308, the first M2M device 18 may send a response to the M2M crawler service 400. The response may include a resource representation associated with the request. At 1310, in accordance with the illustrated example, the M2M crawler service 400 stores the crawled resource representation, crawler metadata, and context information. At 1312, the M2M crawler service 400 sends a second crawler request to a second M2M device 18. In response to the request, at 1314, the second M2M device 18 may send a response to the M2M crawler service 400. The response may include a resource representation associated with the second request. At 1316, in accordance with the illustrated example, the M2M crawler service 400 stores the crawled resource representation, crawler metadata, and context information. At 1318, the M2M crawler service 400 sends a third crawler request to a third M2M device 18. In response to the request, at 1320, the third M2M device 18 may send a third response to the M2M crawler service 400. The third response may include a resource representation associated with the third request. At 1322, in accordance with the illustrated example, the M2M crawler service 400 stores the crawled resource representation, crawler metadata, and context information. Though three responses and requests are illustrated in Fig. 13, it will be understood that the illustration is for example purposes, and any number of requests may be sent to any number of M2M devices.

Based on the responses, as described above, the M2M crawler service can retrieve and store sub-resource representations, and check for links in the sub-resources as well. In an example embodiment, this process can continue until no more links to sub-resources are found. By performing these operations, the M2M crawler service 400 can crawl a given M2M device, and the M2M crawler service 400 can auto-generate M2M crawler metadata for the M2M device that can be used for subsequent re-crawling of the M2M device by the M2M crawler service 400 or other crawlers in the network with which the M2M crawler metadata can be shared, for example.

As mentioned above, a given M2M crawler service may collaborate with other instances of M2M crawler services. For example, in one embodiment, the M2M crawler service 400 collaborates with other instances of M2M crawler services 400 over the second interface 504. The M2M crawler service 400 may also collaborate with other types of services and/or applications in the network over the third and fourth interfaces 506 and 508, respectively. Collaboration may include, for example and without limitation, sharing crawler metadata, sharing crawled resource representations, subscribing to crawler based events, configuring crawler based events, generating crawler-based events, or the like.

Thus, for example, a first or M2M node that hosts the M2M crawler service 400 may receive a query message from at least one web crawler, service, or application. The M2M node may publish one or more resources in response to receiving the query message. The M2M node may publish one or more resources to an instance of the M2M crawler service that is hosted on another or second node in the network. Further, crawler metadata associated with an M2M device may be received from an instance of an M2M crawler service 400 that is hosted on another or second node in the network.

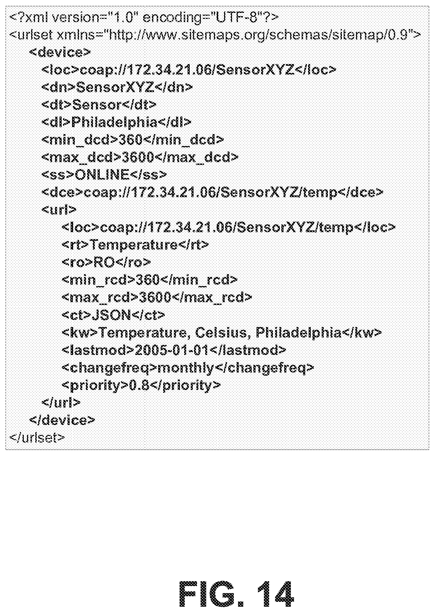

In an example embodiment, the M2M crawler service 400 can publish M2M crawler metadata and/or crawled resource representations using an enhanced version of the Sitemap Protocol that supports M2M crawler metadata extensions and automated publishing. For example, the M2M crawler service 400 can enrich Sitemap files with the different types of crawler metadata and context information described herein. For example, new Sitemap XML tag definitions are defined to support various M2M crawler metadata, such as the crawler metadata illustrated in Table 2 for example, and various context information, such as the context information illustrated in Table 3 for example. Fig. 14 shows an example Sitemap XML file that supports crawler metadata extensions (in bold), although it will be understood that other crawler metadata extensions can be used by embodiments described herein as desired.

The M2M crawler service can publish crawler metadata in one or more Sitemap files for crawled versions of M2M device resources that it has proactively crawled. For example, these enriched Sitemap files can be published to Web crawlers over interface the third interface 506. This may result in crawler requests being targeted to the crawled version of M2M device resource representation stored in the network instead of resources being hosted on the M2M devices. Alternatively, the M2M crawler service can publish crawler metadata in one or more Sitemap files for resources hosted on M2M devices (e.g., for cases where the M2M devices are not resource constrained). This may result in crawler requests being targeted to the M2M devices themselves rather than the M2M crawler service 400.

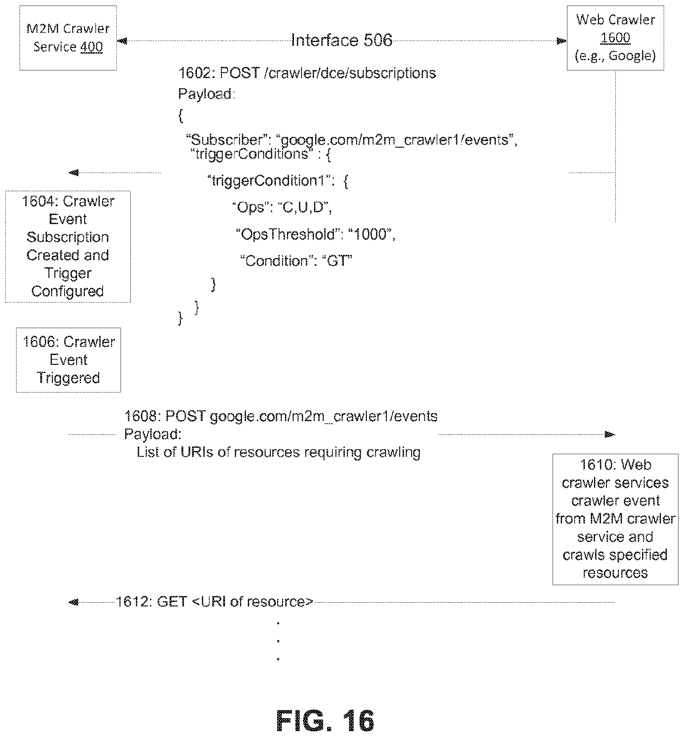

The M2M crawler service can support different methods for publishing crawler metadata via Sitemap files in accordance with various embodiments. In one embodiment, the M2M crawler service can maintain a single Sitemap file for the M2M devices it is providing crawler services for. Using this method, for example, the M2M crawler service can aggregate M2M crawler metadata for multiple M2M devices within a single Sitemap file. This can be done by including separate <device> ... </device> sections in the Sitemap XML for each M2M device. An advantage to maintaining a single Sitemap file may be a reduction in the number of requests required for the M2M crawler service to publish M2M crawler metadata to other Web crawlers, services, applications, etc. An example call flow for in accordance with this embodiment is shown in Fig. 16.

Alternatively, the M2M crawler service can maintain individual Sitemap files for each M2M device for which the M2M crawler service 400 provides services. These individual Sitemap files can be independently published to various Web crawlers, services, and/or applications in the network. In addition, the M2M crawler service 400 can maintain a Sitemap Index file that includes a reference (e.g., a link) to each of the individual Sitemap files for each M2M device. This Sitemap Index file and the individual Sitemap files can be published by the M2M crawler service 400. Thus, crawler metadata can be published for select M2M devices to select Web crawlers, services, and/or applications in the network.

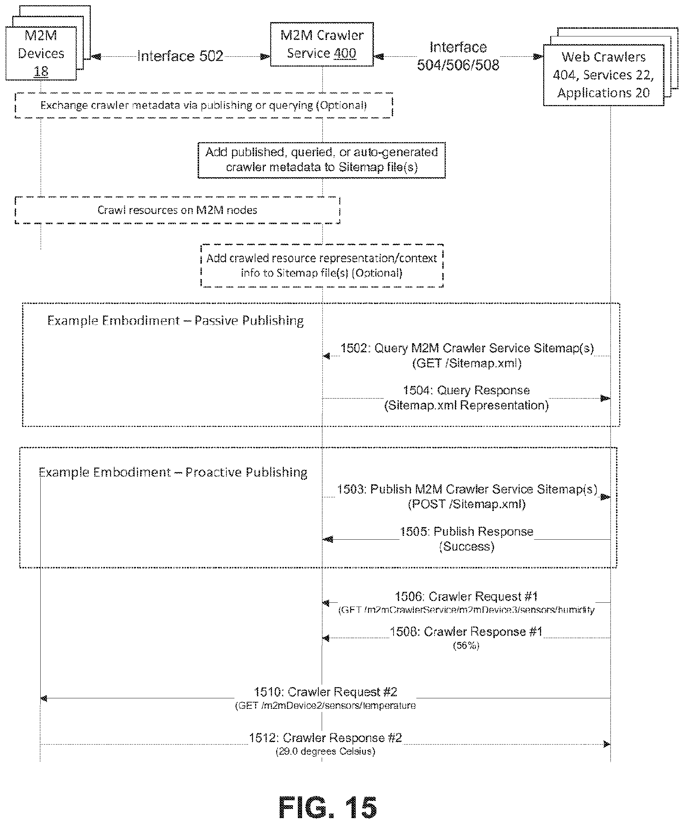

Independent of whether the M2M crawler service 400 maintains a single Sitemap file or multiple Sitemap files, the M2M crawler service can support proactive publishing or passive publishing in accordance with various example embodiments. Referring now to Fig. 15, proactive publishing may include the M2M crawler service 400 sending Sitemap file(s) to one or more Web crawlers 404, services 22, and/or applications 20 in the network (see 1503). In response, at 1505, the web crawlers, services, and/or applications may send a response to the M2M crawler service 400 that indicates that the publishing request was successfully performed. Alternatively, at 1504, the M2M crawler service 400 may make the Sitemap file(s) available at a local well-known path (e.g., /Sitemap.xml) where the file(s) can be found by Web crawlers, services, applications in the network that access/invoke/crawl the M2M crawler service 400. This may be referred to as passive publishing, and the crawler service 400 may passively publish one or more Sitemap files in response to a query message (see 1502).

Thus, the M2M crawler service's Sitemap file(s) can be used to publish M2M crawler metadata and context information. In addition, as described above, the M2M crawler service 400 may locally store crawled resource representations or the crawler service 400 might only collect and publish M2M crawler metadata. In an example scenario in which the M2M crawler service 400 stores crawled resource representations, crawler requests (see 1506) from Web crawlers, services, and applications in the network can be targeted towards the M2M crawler service 400, which can function as a crawler proxy for M2M devices 18. Thus, as shown at 1508, the M2M crawler service 400 can respond directly to the requests. In an example scenario in which the M2M crawler service 400 does not store crawled resource representations, requests (see 1510) from Web crawlers, services, and applications in the network can be targeted towards the M2M devices 18 rather than the M2M crawler service 400. Thus, as shown at 1512, the M2M devices 18 may respond to the requests.

Thus, as described above, an M2M node, which may host the M2M crawler service 400 for example, may receive crawler metadata associated with an M2M device. The M2M node may crawl the M2M device for one or more resources in accordance with the received crawler metadata. Further, the M2M node may the publish the one or more resources such that the one or more resources can be discovered by at least one of a web crawler, a service, or an application. Publishing the one or more resources may include sending one or more Sitemap files directly to the at least one web crawler, service, or applicaton. Alternativley, or additionally, publishing the one or more resources may include making one or more Sitemap files available at an address such that the one or more Sitemap files can be retrieved at the address by the at least one web crawler, service, or application.

Referring now to Fig. 16, the M2M crawler service 400 can also support generating crawler events, for example, generating and sending crawler events to one or more Web Crawlers, such as a first web crawler 1600, over the third interface 506. Further, the M2M crawler service 400 can generate crawler events for other instances of M2M crawler services over interface 504. Further still, the M2M crawler service 400 can generate crawler events for M2M applications 20, for instance M2M applications 20 that crawl M2M devices 18, over interface 508. Crawler event generation can be triggered by the reception of any M2M device crawler event as described above. The event generation can also be triggered autonomously and natively by the M2M crawler service 400. For example, the M2M crawler service 400 can trigger a crawler event that is generated while the M2M crawler service 400 crawls an M2M device 18. For example, while crawling, the M2M crawler service 400 may detect certain conditions, such as the addition, deletion, or change in state of one or more device resources compared to prior version(s) of resource state maintained by the M2M crawler service 400, that trigger a crawler event to be generated. The M2M crawler service 400 may also configure event triggers that are provided to Web crawlers, M2M services, and/or M2M applications. Further, the M2M crawler service 400 may configure crawler events that are supported using various crawler trigger condition semantics, such as those illustrated in Table 4 for example.

With continuing reference to Fig. 16, the illustrated M2M crawler service 400 supports a crawler event subscription resource ('crawler/dce/subscriptions') that allows Web crawlers, M2M services, and M2M applications to subscribe to crawler events using a RESTful POST operation. At 1602, the web crawler sends a subscription request to the M2M crawler service 400. Included in the payload of the example subscription request is the trigger condition for the crawler event using the example JSON formatted semantic descriptions specified in Table 4. In this example, the Web crawler 1600 configures the M2M crawler service 400 to generate a crawler event if/when the total number of create, update or delete operations that the crawler service 400 observes across all of its M2M devices is greater than 1000. Also included in the example is a callback URI that the M2M crawler service 400 can use to send a crawler event to the Web crawler 1600 if/when the trigger condition is satisfied. Thus, at 1604, the M2M crawler service 400 creates the crawler event subscription and configures the trigger in accordance with the response. At 1606, the specified crawler event is triggered. At 1608, an event payload is sent to the Web crawler 1600. Included in the example event payload is a list of URIs of resources that require crawling due to changes in their state. For example, at 610, upon receiving the crawler event, the Web crawler 1600 can decide whether to perform crawling of the M2M device resources in accordance with the event payload. At 1612, the Web crawler 1600 may crawl select M2M device resources.

Thus, as described above, an M2M node, which may host the M2M crawler service 400 for example, may receive a subscription request from a web crawler. The subscription request may include a trigger condition associated with a crawler event. The M2M node may create a crawler event subscription in accordance with the subscription request. When the trigger condition is satisfied, the M2M node may send a notification of the crawler event to the web crawler. The notification may include a list of one or more resources associated with the trigger condition.

It will be understood that the entities performing the steps illustrated in Figs. 15 and 16 are logical entities that may be implemented in the form of software (e.g., computer-executable instructions) stored in a memory of, and executing on a processor of, a device, server, or computer system such as those illustrated in Fig. 18C or Fig. 18D. That is, the method(s) illustrated in Figs. 15 and 16 may be implemented in the form of software (e.g., computer-executable instructions) stored in a memory of a computing device, such as the device or computer system illustrated in Figs. 18C or 18D, which computer executable instructions, when executed by a processor of the computing device, perform the steps illustrated in Figs. 15 and 16.

As describe with reference to Fig. 5, M2M crawler service instances can be distributed across a network of M2M devices (e.g., M2M servers, M2M gateways, M2M devices, etc.). Such service instances may collaborate in a distributed and/or hierarchical manner to distribute crawler requests and share crawler metadata and crawled resource representations with one another. For example, a M2M crawler service instance hosted on a M2M gateway device can crawl M2M devices that are registered to the gateway. The M2M crawler service can then publish (e.g., over the interface 504) these crawled resource representations and crawler metadata to a M2M crawler service instance hosted on an M2M server to which the M2M gateway is registered. Similarly, this M2M crawler service can publish these crawler results to other M2M crawler service instances hosted on other M2M servers in the network.

In an example embodiment, M2M crawler service collaboration is based on the Sitemap publishing mechanisms described above, wherein each M2M crawler service instance publishes its Sitemap(s) to other M2M crawler service instances higher up in a hierarchy. In doing so, crawling of M2M devices throughout a network can be performed in a more coordinated manner as compared to the manner in which current Web crawlers crawl the Web. By publishing crawler metadata and results in a hierarchical manner, for example, M2M crawler service collaboration can reduce the amount of times an individual M2M device is crawled because crawler results can be bubbled up to M2M crawler service instances higher in the hierarchy. The M2M crawler service instances residing higher in the hierarchy as compared to other M2M crawler service instances can then be used to service crawler requests before the lower M2M crawler service instances. If a particular M2M crawler service instance cannot service the request (e.g., does not have valid crawler results), it can then determine whether or not to forward the request to M2M crawler service instances lower in the hierarchy. By supporting this form of hierarchical M2M crawler service collaboration, the amount of crawler traffic in M2M networks, as well as the burden of crawler traffic on resource constrained M2M devices, can be greatly reduced.

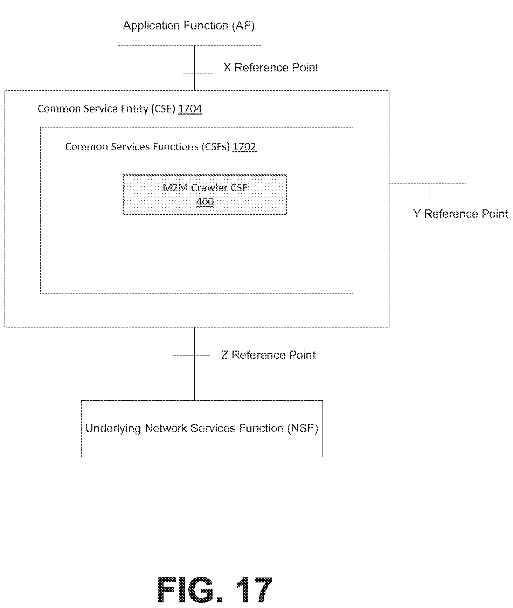

Referring now to Fig. 17, oneM2M defines capabilities supported by the oneM2M service layer, which are referred to as Capability Service Functions (CSFs) 1702. The oneM2M service layer is referred to as a Capability Services Entity (CSE) 1704. In one embodiment, the M2M crawler service 400 can be supported as a oneM2M CSF, and thus can be referred to as an M2M crawler CSF 400. For example, the M2M devices that the crawler CSF 400 crawls may be M2M devices, gateways, and servers that host applications and/or CSEs themselves. The applications and CSEs 1704 can support resources that the M2M crawler CSF 400 can crawl and collect metadata for. This crawling can be performed over the oneM2M defined 'X' and 'Y' reference points. The functionality described herein of the M2M crawler service 400 interfaces 502, 506, and 508 can be supported by defining corresponding functionality on the oneM2M 'X' reference point. Similarly, the functionality described herein of the M2M crawler service 400 interface 504 can be supported by defining operations on the oneM2M 'Y' reference point.

For example, a crawler CSF 400 can share crawler results with other crawler CSF instances in the network. A crawler CSF 400 can also share crawler results with other types of CSFs as well as other non-oneM2M services and applications in the network (e.g., Web crawlers).

In accordance with an example embodiment, the M2M crawler metadata illustrated in Table 2, the M2M crawler context information illustrated in Table 3, and the M2M crawler event subscription and semantics described above can be defined as new resources and attributes within the oneM2M architecture. Similarly, the M2M crawler methods described herein can be defined as M2M crawler CSF procedures in the oneM2M architecture.

ETSI M2M defines the capabilities supported by the ETSI M2M service layer, which are referred to as Service Capabilities (SCs). The ETSI M2M service layer is referred to as a Service Capability Layer (SCL). In one embodiment, the M2M crawler service 400 described herein is supported as an ETSI M2M SC. The M2M devices that the crawler SC crawls may be M2M devices, gateways, and servers that host applications and/or SCLs themselves. The applications and SCLs can support resources that the M2M crawler SC can crawl and collect metadata for. This crawling can be performed over the 'dla', 'mIa' and 'mId' reference points, where the M2M crawler service 400 interface 502 described herein can be supported by defining operations on the 'dIa' reference point, interface 506 and 508 described herein can be supported by defining operations on the 'mIa' reference point, and interface 504 described herein can be supported by defining operations on the 'mId' reference point.

For example, a crawler SC can share crawler results with other crawler SC instances in the network. A crawler SC can also share crawler results with other types of SCs as well as other non-ETSI M2M services and applications in the network (e.g., Web crawlers).

The example M2M crawler metadata illustrated in Table 2, the M2M crawler context information illustrated in Table 3, and the M2M crawler event subscription and semantics described above can be defined as new resources and attributes within the ETSI M2M resource structure in accordance with an example embodiment. Similarly the M2M crawler methods described herein can be defined as M2M crawler SC procedures in the ETSI M2M architecture. For example, in accordance with one embodiment, the M2M crawler SC can run as a background task, crawl M2M device resource stored within the M2M service layer, and generate crawler metadata. In doing so, this metadata can in turn be made available to Web crawlers (e.g., via enhanced Sitemap methods). Thus, for example, the M2M crawler SC provides a service to the local SCL as well as the M2M devices registered to the SCL by advertising crawler metadata to Web search engines that people can more readily find.

As described above, embodiments allow enhanced IoT Web browsing. For example, M2M devices can be searched using web search engines. Various queries can be entered by a user into a search engine to retrieve information associated with M2M devices. Example queries include, for example and without limitation, queries related to a type of an M2M device, a physical location of an M2M device, content type associated with M2M devices, units of measurement associated with M2M devices, or the like. In addition, using embodiments described above, search engine results can be displayed on a user's computing device that include various information associated with M2M devices such as, for example, a reachability status of a given M2M device, availability of content (e.g., past or present) associated with an M2M device, or the like.

Fig. 18A is a diagram of an example machine-to-machine (M2M), Internet of Things (IoT), or Web of Things (WoT) communication system 10 in which one or more disclosed embodiments may be implemented. Generally, M2M technologies provide building blocks for the IoT/WoT, and any M2M device, M2M gateway or M2M service platform may be a component of the IoT/WoT as well as an IoT/WoT service layer, etc.

As shown in Fig. 18A, the M2M/ IoT/WoT communication system 10 includes a communication network 12. The communication network 12 may be a fixed network (e.g., Ethernet, Fiber, ISDN, PLC, or the like) or a wireless network (e.g., WLAN, cellular, or the like) or a network of heterogeneous networks. For example, the communication network 12 may comprise of multiple access networks that provides content such as voice, data, video, messaging, broadcast, or the like to multiple users. For example, the communication network 12 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like. Further, the communication network 12 may comprise other networks such as a core network, the Internet, a sensor network, an industrial control network, a personal area network, a fused personal network, a satellite network, a home network, or an enterprise network for example.

As shown in Fig. 18A, the M2M/ IoT/WoT communication system 10 may include the Infrastructure Domain and the Field Domain. The Infrastructure Domain refers to the network side of the end-to-end M2M deployment, and the Field Domain refers to the area networks, usually behind an M2M gateway. The Field Domain includes M2M gateways 14 and terminal devices 18. It will be appreciated that any number of M2M gateway devices 14 and M2M terminal devices 18 may be included in the M2M/ IoT/WoT communication system 10 as desired. Each of the M2M gateway devices 14 and M2M terminal devices 18 are configured to transmit and receive signals via the communication network 12 or direct radio link. The M2M gateway device 14 allows wireless M2M devices (e.g. cellular and non-cellular) as well as fixed network M2M devices (e.g., PLC) to communicate either through operator networks, such as the communication network 12 or direct radio link. For example, the M2M devices 18 may collect data and send the data, via the communication network 12 or direct radio link, to an M2M application 20 or M2M devices 18. The M2M devices 18 may also receive data from the M2M application 20 or an M2M device 18. Further, data and signals may be sent to and received from the M2M application 20 via an M2M service layer 22, as described below. M2M devices 18 and gateways 14 may communicate via various networks including, cellular, WLAN, WPAN (e.g., Zigbee, 6LoWPAN, Bluetooth), direct radio link, and wireline for example.

Referring to Fig. 18B, the illustrated M2M service layer 22 in the field domain provides services for the M2M application 20, M2M gateway devices 14, and M2M terminal devices 18 and the communication network 12. It will be understood that the M2M service layer 22 may communicate with any number of M2M applications, M2M gateway devices 14, M2M terminal devices 18, and communication networks 12 as desired. The M2M service layer 22 may be implemented by one or more servers, computers, or the like. The M2M service layer 22 provides service capabilities that apply to M2M terminal devices 18, M2M gateway devices 14 and M2M applications 20. The functions of the M2M service layer 22 may be implemented in a variety of ways, for example as a web server, in the cellular core network, in the cloud, etc.

Similar to the illustrated M2M service layer 22, there is the M2M service layer 22' in the Infrastructure Domain. M2M service layer 22' provides services for the M2M application 20' and the underlying communication network 12' in the infrastructure domain. M2M service layer 22' also provides services for the M2M gateway devices 14 and M2M terminal devices 18 in the field domain. It will be understood that the M2M service layer 22' may communicate with any number of M2M applications, M2M gateway devices and M2M terminal devices. The M2M service layer 22' may interact with a service layer by a different service provider. The M2M service layer 22' may be implemented by one or more servers, computers, virtual machines (e.g., cloud/compute/storage farms, etc.) or the like.

Still Referring to Fig. 18B, the M2M service layer 22 and 22' provide a core set of service delivery capabilities that diverse applications and verticals can leverage. These service capabilities enable M2M applications 20 and 20' to interact with devices and perform functions such as data collection, data analysis, device management, security, billing, service/device discovery etc. Essentially, these service capabilities free the applications of the burden of implementing these functionalities, thus simplifying application development and reducing cost and time to market. The service layer 22 and 22' also enables M2M applications 20 and 20' to communicate through various networks 12 and 12' in connection with the services that the service layer 22 and 22' provide.

In some embodiments, M2M applications 20 and 20' may include desired applications that communicate using session credentials, as discussed herein. The M2M applications 20 and 20' may include applications in various industries such as, without limitation, transportation, health and wellness, connected home, energy management, asset tracking, and security and surveillance. As mentioned above, the M2M service layer, running across the devices, gateways, and other servers of the system, supports functions such as, for example, data collection, device management, security, billing, location tracking/geofencing, device/service discovery, and legacy systems integration, and provides these functions as services to the M2M applications 20 and 20'.

The M2M crawling service 400 of the present application may be implemented as part of any service layer. The service layer is a software middleware layer that supports value-added service capabilities through a set of application programming interfaces (APIs) and underlying networking interfaces. An M2M entity (e.g., an M2M functional entity such as a device, gateway, or service/platform that may be implemented by a combination of hardware and software) may provide an application or service. Both ETSI M2M and oneM2M use a service layer that may contain the E2E M2M service layer session management and other things of the present invention. ETSI M2M's service layer is referred to as the Service Capability Layer (SCL). The SCL may be implemented within an M2M device (where it is referred to as a device SCL (DSCL)), a gateway (where it is referred to as a gateway SCL (GSCL)) and/or a network node (where it is referred to as a network SCL (NSCL)). The oneM2M service layer supports a set of Common Service Functions (CSFs) (i.e. service capabilities). An instantiation of a set of one or more particular types of CSFs is referred to as a Common Services Entity (CSE), which can be hosted on different types of network nodes (e.g. infrastructure node, middle node, application-specific node). Further, the E2E M2M service layer session management and other things of the present application can be implemented as part of an M2M network that uses a Service Oriented Architecture (SOA) and/or a resource-oriented architecture (ROA) to access services such as the session endpoint, session manager, and session credential function, among other things, of the present application.

Fig. 18C is a system diagram of an example M2M device 30, such as the M2M terminal device 18 or the M2M gateway device 14 for example. As shown in Fig. 18C, the M2M device 30 may include a processor 32, a transceiver 34, a transmit/receive element 36, a speaker/microphone 38, a keypad 40, a display/touchpad 42, non-removable memory 44, removable memory 46, a power source 48, a global positioning system (GPS) chipset 50, and other peripherals 52. It will be appreciated that the M2M device 30 may include any subcombination of the foregoing elements while remaining consistent with an embodiment. This device may be a device that uses the disclosed systems and methods that include the M2M crawling service 400.

The processor 32 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 32 may perform signal coding, data processing, power control, input/output processing, and/or any other functionality that enables the M2M device 30 to operate in a wireless environment. The processor 32 may be coupled to the transceiver 34, which may be coupled to the transmit/receive element 36. While Fig. 18C depicts the processor 32 and the transceiver 34 as separate components, it will be appreciated that the processor 32 and the transceiver 34 may be integrated together in an electronic package or chip. The processor 32 may perform application-layer programs (e.g., browsers) and/or radio access-layer (RAN) programs and/or communications. The processor 32 may perform security operations such as authentication, security key agreement, and/or cryptographic operations, such as at the access-layer and/or application layer for example.

The transmit/receive element 36 may be configured to transmit signals to, or receive signals from, an M2M service platform 22. For example, in an embodiment, the transmit/receive element 36 may be an antenna configured to transmit and/or receive RF signals. The transmit/receive element 36 may support various networks and air interfaces, such as WLAN, WPAN, cellular, and the like. In an embodiment, the transmit/receive element 36 may be an emitter/detector configured to transmit and/or receive IR, UV, or visible light signals, for example. In yet another embodiment, the transmit/receive element 36 may be configured to transmit and receive both RF and light signals. It will be appreciated that the transmit/receive element 36 may be configured to transmit and/or receive any combination of wireless or wired signals.

In addition, although the transmit/receive element 36 is depicted in Fig. 18C as a single element, the M2M device 30 may include any number of transmit/receive elements 36. More specifically, the M2M device 30 may employ MIMO technology. Thus, in an embodiment, the M2M device 30 may include two or more transmit/receive elements 36 (*e.g.,* multiple antennas) for transmitting and receiving wireless signals.

The transceiver 34 may be configured to modulate the signals that are to be transmitted by the transmit/receive element 36 and to demodulate the signals that are received by the transmit/receive element 36. As noted above, the M2M device 30 may have multi-mode capabilities. Thus, the transceiver 34 may include multiple transceivers for enabling the M2M device 30 to communicate via multiple RATs, such as UTRA and IEEE 802.11, for example.

The processor 32 may access information from, and store data in, any type of suitable memory, such as the non-removable memory 44 and/or the removable memory 46. The non-removable memory 44 may include random-access memory (RAM), read-only memory (ROM), a hard disk, or any other type of memory storage device. The removable memory 46 may include a subscriber identity module (SIM) card, a memory stick, a secure digital (SD) memory card, and the like. In other embodiments, the processor 32 may access information from, and store data in, memory that is not physically located on the M2M device 30, such as on a server or a home computer. The processor 32 may be configured to control lighting patterns, images, or colors on the display or indicators 42 in response to whether the M2M crawling service 400 (e.g., crawling, publishing, collaborating) in some of the embodiments described herein are successful or unsuccessful, or otherwise indicate the status of M2M crawling service 400 performance. In another example, the display may show information with regard to crawling events, which are described herein. A graphical user interface, which may be shown on the display, may be layered on top of an API to allow a user to interactively establish and manage a Web search of M2M devices via the underlying M2M crawling service 400 described herein. For example, search engine results can be displayed on a user's computing device that include various information associated with M2M devices such as, for example, a reachability status of a given M2M device, availability of content (e.g., past or present) associated with an M2M device, or the like.

The processor 32 may receive power from the power source 48, and may be configured to distribute and/or control the power to the other components in the M2M device 30. The power source 48 may be any suitable device for powering the M2M device 30. For example, the power source 48 may include one or more dry cell batteries (*e.g*., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which is configured to provide location information (e.g., longitude and latitude) regarding the current location of the M2M device 30. It will be appreciated that the M2M device 30 may acquire location information by way of any suitable location-determination method while remaining consistent with an embodiment.

The processor 32 may further be coupled to other peripherals 52, which may include one or more software and/or hardware modules that provide additional features, functionality and/or wired or wireless connectivity. For example, the peripherals 52 may include an accelerometer, an e-compass, a satellite transceiver, a sensor, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

Fig. 18D is a block diagram of an exemplary computing system 90 on which, for example, the M2M service platform 22 of Fig. 18A and Fig. 18B may be implemented. Computing system 90 may comprise a computer or server and may be controlled primarily by computer readable instructions, which may be in the form of software, wherever, or by whatever means such software is stored or accessed. Such computer readable instructions may be executed within central processing unit (CPU) 91 to cause computing system 90 to do work. In many known workstations, servers, and personal computers, central processing unit 91 is implemented by a single-chip CPU called a microprocessor. In other machines, the central processing unit 91 may comprise multiple processors. Coprocessor 81 is an optional processor, distinct from main CPU 91, which performs additional functions or assists CPU 91. CPU 91 and/or coprocessor 81 may receive, generate, and process data related to the disclosed systems and methods for E2E M2M service layer sessions, such as receiving session credentials or authenticating based on session credentials.

In operation, CPU 91 fetches, decodes, and executes instructions, and transfers information to and from other resources via the computer's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memory devices coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 can be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode can access only memory mapped by its own process virtual address space; it cannot access memory within another process's virtual address space unless memory sharing between the processes has been set up.

In addition, computing system 90 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain network adaptor 97 that may be used to connect computing system 90 to an external communications network, such as network 12 of Fig. 18A and Fig. 18B.

It is understood that any or all of the systems, methods and processes described herein may be embodied in the form of computer executable instructions (*i.e.,* program code) stored on a computer-readable storage medium which instructions, when executed by a machine, such as a computer, server, M2M terminal device, M2M gateway device, or the like, perform and/or implement the systems, methods and processes described herein. Specifically, any of the steps, operations or functions described above may be implemented in the form of such computer executable instructions. Computer readable storage media include both volatile and nonvolatile, removable and non-removable media implemented in any method or technology for storage of information, but such computer readable storage media do not includes signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other physical medium which can be used to store the desired information and which can be accessed by a computer.

In describing preferred embodiments of the subject matter of the present disclosure, as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A machine-to-machine, M2M, node comprising:
a processor; and
a memory coupled with the processor, the memory having stored thereon executable instructions that when executed by the processor cause the processor to effectuate operations comprising:
receiving crawler metadata associated with an M2M device;
crawling the M2M device for one or more resources in accordance with the received crawler metadata wherein the crawler metadata indicates the one or more resources, an order in which the one or more resources are crawled, and a crawling schedule for crawling the M2M device, and wherein the order is based on a priority of each resource, and the crawling schedule indicates when the M2M device should be re-crawled; and
publishing the one or more resources such that the one or more resources can be discovered by a web crawler.

2. The M2M node of claim 1, the operations further comprising:
sending a query to the M2M device for the crawler metadata; and
receiving the crawler metadata in response to the query.

3. The M2M node of claim 1, the operations further comprising:
sending a subscription request to the M2M device, the subscription request including a trigger condition associated with a crawler event, wherein the M2M device is configured in accordance with the subscription request.

4. The M2M node of claim 3, the operations further comprising:
when the trigger condition is satisfied, receiving a notification of the crawler event; and
in response to receiving the notification: i re-crawling the M2M device for a select resource of the one or more resources, wherein the select resource is defined in the subscription request; or ii generating a second notification for one or more web crawlers.

5. The M2M node of claim 1, the operations further comprising:
receiving a query message from the web crawler; and
publishing the one or more resources in response to receiving the query message.

6. The M2M node of claim 1, the operations further comprising:
receiving a constrained RESTful environment, CoRE, resource directory registration request that includes the crawler metadata associated with the M2M device, wherein crawling the M2M device for one or more resources may further comprise receiving a CoRE link format description from the M2M device, the CoRE link format description including the one or more resources.

7. The M2M node of claim 1, the operations further comprising:
receiving a subscription request from a web crawler, the subscription request including a trigger condition associated with a crawler event; and
creating a crawler event subscription in accordance with the subscription request;
when the trigger condition is satisfied, optionally sending a notification of the crawler event to the web crawler, wherein the notification includes a list of one or more resources associated with the trigger condition.

8. A method performed by a first machine-to-machine, M2M, node of a plurality of M2M nodes comprising a plurality of M2M devices,
wherein the plurality of M2M nodes communicate via a network, the method comprising:
receiving crawler metadata associated with at least one of the plurality of M2M devices;
crawling the at least one M2M device for one or more resources in accordance with the received crawler metadata, wherein the crawler metadata indicates the one or more resources, an order in which the one or more resources are crawled, and a crawling schedule for crawling the M2M device, and wherein the order is based on a priority of each resource, and the crawling schedule indicates when the M2M device should be re-crawled; and
publishing the one or more resources such that the one or more resources can be discovered by a web crawler.

9. The method of claim 8, the method further comprising:
sending a query to the at least one M2M device for the crawler metadata; and
receiving the crawler metadata in response to the query.

10. The method of claim 8, the method further comprising:
sending a subscription request to the at least one M2M device, the subscription request including a trigger condition associated with a crawler event, wherein the M2M device is configured in accordance with the subscription request.

11. The method of claim 10, the method further comprising:
when the trigger condition is satisfied, receiving a notification of the crawler event; and
in response to receiving the notification: i re-crawling the at least one M2M device for a select resource of the one or more resources, wherein the select resource is defined in the subscription request; or ii generating a second notification for one or more web crawlers.

12. The method of claim 8, the method further comprising:
receiving a query message from the web crawler; and
publishing the one or more resources in response to receiving the query message.

13. The M2M node of claim 1 or the method of claim 8, wherein publishing the one or more resources comprises one of: sending one or more Sitemap files directly to the web crawler; and making one or more Sitemap files available at an address such that the one or more Sitemap files can be retrieved at the address by the web crawler.

14. The method of claim 8, the method further comprising:
receiving a subscription request from a web crawler, the subscription request including a trigger condition associated with a crawler event; and
creating a crawler event subscription in accordance with the subscription request;
when the trigger condition is satisfied, optionally sending a notification of the crawler event to the web crawler, wherein the notification includes a list of one or more resources associated with the trigger condition.

15. The method of claim 8, wherein the one or more resources are published to an instance of an M2M crawler service that is hosted on a second node in the network.

16. The method of claim 8, wherein crawler metadata associated with at least one of the plurality of M2M devices is received from an instance of an M2M crawler service that is hosted on a second node in the network.

17. The method of claim 8, the method further comprising:
monitoring one or more requests that target the at least one M2M device;
based on the monitoring, determining context information associated with the at least one M2M device; and
based on the context information, configuring the crawler metadata associated with the at least one M2M device such that the at least one M2M device can be crawled.

## Patentansprüche

1. Knoten zwischen Maschinen, M2M-Knoten, der Folgendes umfasst:
einen Prozessor und
einen Speicher, der mit dem Prozessor gekoppelt ist, wobei im Speicher ausführbare Anweisungen gespeichert sind, die, wenn sie durch den Prozessor ausgeführt werden, bewirken, dass der Prozessor Vorgänge bewirkt, die Folgendes umfassen:
Empfangen von Crawler-Metadaten, die einer M2M-Einrichtung zugeordnet sind;
Crawlen der M2M-Einrichtung hinsichtlich eines oder mehrerer Betriebsmittel gemäß den empfangenen Crawler-Metadaten, wobei die Crawler-Metadaten das eine oder die mehreren Betriebsmittel, eine Reihenfolge, in der das eine oder die mehreren Betriebsmittel gecrawlt werden, und einen Crawl-Zeitplan zum Crawlen der M2M-Einrichtung anzeigen, die Reihenfolge auf einer Priorität jedes Betriebsmittels basiert und der Crawl-Zeitplan anzeigt, wann die M2M-Einrichtung erneut gecrawlt werden soll; und
Veröffentlichen des einen oder der mehreren Betriebsmittel derart, dass das eine oder die mehreren Betriebsmittel durch einen Web-Crawler entdeckt werden können.

2. M2M-Knoten nach Anspruch 1, wobei der Betrieb ferner Folgendes umfasst:
Senden einer Abfrage der Crawler-Metadaten zur M2M-Einrichtung und
Empfangen der Crawler-Metadaten als Antwort auf die Abfrage.

3. M2M-Knoten nach Anspruch 1, wobei der Betrieb ferner Folgendes umfasst:
Senden einer Abonnementanforderung zur M2M-Einrichtung, wobei die Abonnementanforderung eine Auslösebedingung enthält, die einem Crawler-Ereignis zugeordnet ist, und die M2M-Einrichtung gemäß der Abonnementanforderung konfiguriert ist.

4. M2M-Knoten nach Anspruch 3, wobei der Betrieb ferner Folgendes umfasst:
dann, wenn die Auslösebedingung erfüllt ist, Empfangen einer Benachrichtigung über das Crawler-Ereignis und
als Antwort auf das Empfangen der Benachrichtigung: i erneutes Crawlen der M2M-Einrichtung hinsichtlich eines gewählten Betriebsmittels des einen oder der mehreren Betriebsmittel, wobei das gewählte Betriebsmittel in der Abonnementanforderung definiert ist; oder ii Erzeugen einer zweiten Benachrichtigung für einen oder mehrere Web-Crawler.

5. M2M-Knoten nach Anspruch 1, wobei der Betrieb ferner Folgendes umfasst:
Empfangen einer Anforderungsnachricht vom Web-Crawler und
Veröffentlichen des einen oder der mehreren Betriebsmittel als Antwort auf das Empfangen der Anforderungsnachricht.

6. M2M-Knoten nach Anspruch 1, wobei der Betrieb ferner Folgendes umfasst:
Empfangen einer Betriebsmittelverzeichnis-Registrierungsanforderung für eine eingeschränkt erholsame Umgebung, CoRE-Betriebsmittelverzeichnis-Registrierungsanforderung, die die Crawler-Metadaten, die der M2M-Einrichtung zugeordnet sind, enthält, wobei das Crawlen der M2M-Einrichtung hinsichtlich eines oder mehrerer Betriebsmittel ferner ein Empfangen einer CoRE-Verbindungsformatbeschreibung von der M2M-Einrichtung umfassen kann, wobei die CoRE-Verbindungsformatbeschreibung das eine oder die mehreren Betriebsmittel enthält.

7. M2M-Knoten nach Anspruch 1, wobei der Betrieb ferner Folgendes umfasst:
Empfangen einer Abonnementanforderung von einem Web-Crawler, wobei die Abonnementanforderung eine Auslösebedingung, die einem Crawler-Ereignis zugeordnet ist, enthält; und
Erzeugen eines Crawler-Ereignisabonnements gemäß der Abonnementanforderung
dann, wenn die Auslösebedingung erfüllt ist, wahlweises Senden einer Benachrichtigung des Crawler-Ereignisses zum Web-Crawler, wobei die Benachrichtigung eine Liste eines oder mehrerer Betriebsmittel, die der Auslösebedingung zugeordnet sind, enthält.

8. Verfahren, das durch einen ersten Knoten zwischen Maschinen, M2M-Knoten, von mehreren M2M-Knoten, die mehrere M2M-Einrichtungen umfassen, durchgeführt wird, wobei die mehreren M2M-Knoten mittels eines Netzes kommunizieren und das Verfahren Folgendes umfasst:
Empfangen von Crawler-Metadaten, die mindestens einer der mehreren M2M-Einrichtung zugeordnet sind;
Crawlen der mindestens einen M2M-Einrichtung hinsichtlich eines oder mehrerer Betriebsmittel gemäß den empfangenen Crawler-Metadaten, wobei die Crawler-Metadaten das eine oder die mehreren Betriebsmittel, eine Reihenfolge, in der das eine oder die mehreren Betriebsmittel gecrawlt werden, und einen Crawl-Zeitplan zum Crawlen der M2M-Einrichtung anzeigen, die Reihenfolge auf einer Priorität jedes Betriebsmittels basiert und der Crawl-Zeitplan anzeigt, wann die M2M-Einrichtung erneut gecrawlt werden soll; und
Veröffentlichen des einen oder der mehreren Betriebsmittel derart, dass das eine oder die mehreren Betriebsmittel durch einen Web-Crawler entdeckt werden können.

9. Verfahren nach Anspruch 8, wobei das Verfahren ferner Folgendes umfasst:
Senden einer Abfrage der Crawler-Metadaten zur mindestens einen M2M-Einrichtung und
Empfangen der Crawler-Metadaten als Antwort auf die Abfrage.

10. Verfahren nach Anspruch 8, wobei das Verfahren ferner Folgendes umfasst:
Senden einer Abonnementanforderung zur mindestens einen M2M-Einrichtung, wobei die Abonnementanforderung eine Auslösebedingung enthält, die einem Crawler-Ereignis zugeordnet ist, und die M2M-Einrichtung gemäß der Abonnementanforderung konfiguriert ist.

11. Verfahren nach Anspruch 10, wobei das Verfahren ferner Folgendes umfasst:
dann, wenn die Auslösebedingung erfüllt ist, Empfangen einer Benachrichtigung über das Crawler-Ereignis und
als Antwort auf das Empfangen der Benachrichtigung: i erneutes Crawlen der mindestens einen M2M-Einrichtung hinsichtlich eines gewählten Betriebsmittels des einen oder der mehreren Betriebsmittel, wobei das gewählte Betriebsmittel in der Abonnementanforderung definiert ist; oder ii Erzeugen einer zweiten Benachrichtigung für einen oder mehrere Web-Crawler.

12. Verfahren nach Anspruch 8, wobei das Verfahren ferner Folgendes umfasst:
Empfangen einer Anforderungsnachricht vom Web-Crawler und
Veröffentlichen des einen oder der mehreren Betriebsmittel als Antwort auf das Empfangen der Anforderungsnachricht.

13. M2M-Knoten nach Anspruch 1 oder Verfahren nach Anspruch 8, wobei das Veröffentlichen des einen oder der mehreren Betriebsmittel Folgendes umfasst: Senden einer oder mehrerer Sitemap-Dateien direkt zum Web-Crawler oder Bereitstellen einer oder mehrerer Sitemap-Dateien bei einer Adresse derart, dass die eine oder die mehreren Sitemap-Dateien bei der Adresse durch den Web-Crawler abgerufen werden können.

14. Verfahren nach Anspruch 8, wobei das Verfahren ferner Folgendes umfasst:
Empfangen einer Abonnementanforderung von einem Web-Crawler, wobei die Abonnementanforderung eine Auslösebedingung, die einem Crawler-Ereignis zugeordnet ist, enthält; und
Erzeugen eines Crawler-Ereignisabonnements gemäß der Abonnementanforderung
dann, wenn die Auslösebedingung erfüllt ist, wahlweises Senden einer Benachrichtigung des Crawler-Ereignisses zum Web-Crawler, wobei die Benachrichtigung eine Liste eines oder mehrerer Betriebsmittel, die der Auslösebedingung zugeordnet sind, enthält.

15. Verfahren nach Anspruch 8, wobei das eine oder die mehreren Betriebsmittel auf einer Instanz eines M2M-Crawler-Dienstes veröffentlicht werden, die auf einem zweiten Knoten im Netz gehostet wird.

16. Verfahren nach Anspruch 8, wobei Crawler-Metadaten, die mindestens einer der mehreren M2M-Einrichtungen zugeordnet sind, von einer Instanz eines M2M-Crawlerdienstes, die auf einem zweiten Knoten im Netz gehostet wird, empfangen werden.

17. Verfahren nach Anspruch 8, wobei das Verfahren ferner Folgendes umfasst:
Überwachen einer oder mehrerer Anforderungen, die auf die mindestens eine M2M-Einrichtung abzielen;
Bestimmen von Kontextinformationen, die der mindestens einen M2M-Einrichtung zugeordnet sind, auf der Grundlage des Überwachens; und
Konfigurieren der Crawler-Metadaten, die der mindestens einen M2M-Einrichtung zugeordnet sind, auf der Grundlage der Kontextinformationen, derart, dass die mindestens eine M2M-Einrichtung gecrawlt werden kann.

## Revendications

1. Noeud de machine à machine, M2M, comprenant :
un processeur ; et
une mémoire couplée au processeur, la mémoire comportant des instructions exécutables stockées sur celle-ci qui, lorsqu'elles sont exécutées par le processeur, amènent le processeur à exécuter les opérations suivantes :
recevoir des métadonnées du robot d'indexation associées à un dispositif M2M ;
parcourir le dispositif M2M pour indexation d'une ou plusieurs ressources conformément aux métadonnées de robot d'indexation reçues, où les métadonnées du robot d'indexation indiquent les une ou plusieurs ressources, un ordre dans lequel les une ou plusieurs ressources ont été parcourues pour indexation, et un planning d'indexation du dispositif M2M, et où l'ordre est basé sur une priorité de chaque ressource, et le planning d'indexation indique quand le dispositif M2M devra être à nouveau parcouru pour indexation ; et
publier les une ou plusieurs ressources de manière à ce que les une ou plusieurs ressources puissent être découvertes par un robot d'indexation Web.

2. Noeud M2M selon la revendication 1, les opérations comprenant en outre les étapes suivantes :
envoyer une requête au dispositif M2M pour les métadonnées du robot d'indexation ; et
recevoir des métadonnées du robot d'indexation en réponse à la requête.

3. Noeud M2M selon la revendication 1, les opérations comprenant en outre l'étape suivante :
envoyer une demande d'abonnement au dispositif M2M, la demande d'abonnement incluant une condition de déclenchement associée à un événement du robot d'indexation, où le dispositif M2M est configuré conformément à la demande d'abonnement.

4. Noeud M2M selon la revendication 3, les opérations comprenant en outre les étapes suivantes :
lorsque la condition de déclenchement est satisfaite, recevoir une notification de l'événement du robot d'indexation ; et
en réponse à la réception de la notification : i) parcourir à nouveau le dispositif M2M pour indexation d'une ressource sélectionnée des une ou plusieurs ressources, la ressource sélectionnée étant définie dans la demande d'abonnement ; ou ii) générer une seconde notification pour un ou plusieurs robots d'indexation Web.

5. Noeud M2M selon la revendication 1, les opérations comprenant en outre les étapes suivantes :
recevoir un message de requête de la part du robot d'indexation Web ; et
publier les une ou plusieurs ressources en réponse à la réception du message de requête.

6. Noeud M2M selon la revendication 1, les opérations comprenant en outre les étapes suivantes :
recevoir une demande d'enregistrement de répertoire de ressources d'environnement contraint RESTful, CoRE, qui inclut les métadonnées du robot d'indexation associées au dispositif M2M, où parcourir le dispositif M2M pour indexation des une ou plusieurs ressources peut également comprendre de recevoir une description du format de liaison CoRE du dispositif M2M, la description du format de liaison CoRE incluant les une ou plusieurs ressources.

7. Noeud M2M selon la revendication 1, les opérations comprenant en outre : la réception d'une demande d'abonnement provenant d'un robot d'exploration Web, la demande d'abonnement incluant une condition de déclenchement associée à un événement du robot d'exploration ; et
la création d'un abonnement à un événement robot d'indexation conformément à la demande d'abonnement ; lorsque la condition de déclenchement est satisfaite, l'envoi facultatif d'une notification de l'événement robot d'indexation au robot d'indexation web, dans lequel la notification comprend une liste d'une ou plusieurs ressources associées à la condition de déclenchement.

8. Procédé exécuté par un premier noeud de machine à machine, M2M, d'une pluralité de noeuds M2M comprenant une pluralité de dispositifs M2M, où la pluralité de noeuds M2M communique par l'intermédiaire d'un réseau, le procédé comprenant les étapes suivantes :
recevoir des métadonnées de robot d'indexation associées à au moins l'un de la pluralité de dispositifs M2M ;
parcourir l'au moins un dispositif M2M pour indexation d'une ou de plusieurs ressources conformément aux métadonnées de robot d'indexation reçues, où les métadonnées du robot d'indexation indiquent les une ou plusieurs ressources, un ordre dans lequel les une ou plusieurs ressources ont été parcourues pour indexation, et un planning d'indexation du dispositif M2M, et où l'ordre est basé sur une priorité de chaque ressource et le planning d'indexation indique quand le dispositif M2M devra être à nouveau parcouru pour indexation ; et
publier les une ou plusieurs ressources de manière à ce que les une ou plusieurs ressources puissent être découvertes par un robot d'indexation Web.

9. Procédé selon la revendication 8, le procédé comprenant en outre les étapes suivantes :
envoyer une requête à l'au moins un dispositif M2M pour les métadonnées du robot d'indexation ; et
recevoir des métadonnées du robot d'indexation en réponse à la requête.

10. Procédé selon la revendication 8, le procédé comprenant en outre l'étape suivante :
envoyer une demande d'abonnement à l'au moins un dispositif M2M, la demande d'abonnement incluant une condition de déclenchement associée à un événement du robot d'indexation, où le dispositif M2M est configuré conformément à la demande d'abonnement.

11. Procédé selon la revendication 10, le procédé comprenant en outre les étapes suivantes :
lorsque la condition de déclenchement est satisfaite, recevoir une notification de l'événement du robot d'indexation ; et
en réponse à la réception de la notification : i) parcourir à nouveau le dispositif M2M pour indexation d'une ressource sélectionnée des une ou plusieurs ressources, la ressource sélectionnée étant définie dans la demande d'abonnement ; ou ii) générer une seconde notification pour un ou plusieurs robots d'indexation Web.

12. Procédé selon la revendication 8, le procédé comprenant en outre les étapes suivantes :
recevoir un message de requête de la part du robot d'indexation Web ; et
publier les une ou plusieurs ressources en réponse à la réception du message de requête.

13. Noeud M2M selon la revendication 1 ou procédé selon la revendication 8, dans lequel la publication des une ou plusieurs ressources comprend l'une des étapes suivantes : envoyer un ou plusieurs fichiers Sitemap directement au moteur d'indexation Web ; et rendre un ou plusieurs fichiers Sitemap disponibles à une adresse telle que les un ou plusieurs fichiers Sitemap puissent être récupérés à cette adresse par le robot d'indexation Web.

14. Procédé selon la revendication 8, le procédé comprenant en outre les étapes suivantes :
recevoir une demande d'abonnement provenant d'un robot d'indexation Web, la demande d'abonnement incluant une condition de déclenchement associée à un événement du robot d'indexation ; et
créer un abonnement à un événement de robot d'indexation conformément à la demande d'abonnement ; lorsque la condition de déclenchement est satisfaite, envoyer facultativement une notification de l'événement de robot d'indexation au robot d'indexation Web, où la notification comprend une liste d'une ou plusieurs ressources associées à la condition de déclenchement.

15. Procédé selon la revendication 8, dans lequel les une ou plusieurs ressources sont publiées à une instance d'un service de robot d'indexation M2M qui est hébergé sur un second noeud du réseau.

16. Procédé selon la revendication 8, dans lequel des métadonnées de robot d'indexation associées à au moins l'un de la pluralité de dispositifs M2M sont reçues d'une instance d'un service de robot d'indexation M2M qui est hébergé sur un second noeud du réseau.

17. Procédé selon la revendication 8, le procédé comprenant en outre les étapes suivantes :
surveiller une ou plusieurs demandes qui ciblent l'au moins un dispositif M2M ;
en se basant sur la surveillance, déterminer les informations contextuelles associées à l'au moins un dispositif M2M ; et
sur la base des informations contextuelles, configurer les métadonnées du robot d'indexation associées à l'au moins un dispositif M2M de manière à ce que l'au moins un dispositif M2M puisse être parcouru pour indexation.
